# EUROPÄISCHE PATENTSCHRIFT

(11) **EP 3 702 181 B1**
(45) Veröffentlichungstag und Bekanntmachung des Hinweises auf die Patenterteilung: **15.06.2022**
(21) Anmeldenummer: 20157888.7
(22) Anmeldetag: 18.02.2020
(51) Int. Cl.: B60H 1/00, B60H 1/32

(54) **WÄRMEPUMPE MIT TEILLASTREGELUNG**
HEAT PUMP WITH PARTIAL LOAD CONTROL
POMPE À CHALEUR À RÉGULATION PARTIELLE DE LA CHARGE

(30) Priorität: 27.02.2019 DE 102019105035
(43) Veröffentlichungstag der Anmeldung: 02.09.2020
(73) Patentinhaber: Konvekta Aktiengesellschaft, 34613 Schwalmstadt (DE)
(72) Erfinder: Sonnekalb, Michael, 34613 Schwalmstadt (DE); Best, Pascal, 34633 Ottrau (DE); Schmerer, René, 34626 Neukirchen (DE)
(74) Vertreter: Lindinger, Bernhard

(56) Entgegenhaltungen:
- WO-A1-2012/146368
- DE-A1-102005 017 904
- DE-A1-102016 006 682
- DE-A1-102016 110 443

## Beschreibung

### Gebiet der Technik:

Die Erfindung betrifft eine Anlage für ein Elektro- oder Hybridfahrzeug mit einem als Wärmepumpe zum Heizen von Luft für und/oder in zumindest eine(n)/m Teil eines Fahrzeuginnenraums betreibbaren und wenigstens einen Verdichter, wenigstens einen als Kondensator oder Gaskühler betreibbaren Wärmetauscher, wenigstens ein Expansionsorgan sowie wenigstens einen weiteren als Verdampfer betreibbaren Wärmetauscher umfassenden Kältemittelkreislauf, wobei die Verdichterleistung regelbar ist. Insbesondere für Elektro- oder Hybrid-Omnibusse und Schienenfahrzeuge ist eine derartige Anlage einsetzbar. Ferner betrifft die Erfindung ein Verfahren zum Steuern einer derartigen Anlage.

Bei einem Hybridfahrzeug ist eine von zumindest zwei Antriebsarten des Fahrzeugs elektrisch. Bei einem Elektrofahrzeug ist die Antriebsart nur rein elektrisch.

### Stand der Technik:

Bekannt sind Anlagen zum Heizen von Luft für und/oder in zumindest eine(n)/m Teil eines Fahrzeuginnenraums, die einen als Wärmepumpe betreibbaren Kältemittelkreislauf aufweisen, bei denen die Verdichterleistung regelbar ist. So ist in EP1262347A2 eine Anlage zum Heizen oder Kühlen eines Innenraums eines Kraftfahrzeugs offenbart, bei der die Kompressorleistung also die Leistung des Verdichters durch Verstellen des Hubvolumens oder der Kompressordrehzahl regelbar ist. Eine Regelung des Verdichters über Änderung des Hubvolumens ist beispielsweise in DE19607032A1 beschrieben. Dabei wird über eine Schrägscheibe oder Schwenkscheibe die Auslenkung des Kolbens bei einem Axialkolbenverdichter verändert. Bekannt sind auch andere technische Lösungen der Regelung der Verdichterleistung. Zum Beispiel wird bei einer Zylinderbankabschaltung ein Bypass über ein Magnetventil zwischen zwei benachbarten gegenläufigen Zylindern geöffnet. Der erste Zylinder schiebt dann das Gasvolumen in den zweiten Zylinder und umgekehrt. Es besteht dann also eine Kurzschlussverbindung von Kältemittel zwischen Zylindern. Die abgeschaltete Zylinderbank fördert so keinen Gasvolumenstrom in die Anlage. Das Ein- und Ausschalten der Zylinderbank kann mit einer höheren Frequenz erfolgen, sodass im Prinzip eine stufenlose Regelung der Verdichterleistung erreicht wird. Eine weitere ebenfalls in EP1262347A2 erwähnte Regelung ist eine ventilgesteuerte als Bypass ausgebildete Kurzschlussverbindung von Kältemittel, wodurch ein Überströmen von Heißgas von der Druckseite des Verdichters zur Saugseite ermöglicht wird. Dieser Gasvolumenstrom nimmt nicht an der Anlagenleistung teil, muss aber auch vom Verdichter gefördert werden. Somit nimmt auch hierbei die Effizienz ab. In DE102006060259 ist eine Regelung der Verdichterleistung durch die Drosselung der Ansaugleitung des Verdichters beschrieben. Damit werden der Druck und die Gasdichte am Eintritt verringert, sodass weniger Massenstrom gefördert wird und die Leistung abnimmt. Eine ganz ähnliche Wirkungsweise der Regelung der Verdichterleistung hat eine in DE102014011343A1 offenbarte mit Magnetventil regelbare Absperrung des Saugraums einzelner Zylinder des Verdichters. Über die Regelung der Höhe der Frequenz der Absperrung durch das Magnetventil ist quasi eine stufenlose Regelung der Verdichterleistung möglich. Jedoch lässt sich bei diesen verschiedenen Arten der Regelung die Verdichterleistung entweder gar nicht oder zumindest sehr ineffizient stufenlos bis auf 0% herunterregeln oder eine sehr niedrige Verdichterleistung wäre zumindest über längere Zeit wegen des Ölumlaufs in der Anlage nicht sinnvoll. Bei lediglich Regelung der Verdichterleistung ist deshalb ein Teillastbetrieb der Anlage ineffizient beziehungsweise unzureichend. Je weniger die Außentemperatur unterhalb des Sollwerts der Temperatur liegt, die die als Wärmepumpe betriebene Anlage beim Heizen für die Luft im Fahrzeuginnraum erreichen soll, desto geringer ist die benötigte Wärmeleistung und damit die Auslastung der Anlage. Sie ist dann nur mit Teillast zu betreiben. Dieser Zustand tritt zumindest in Mitteleuropa häufig auf, denn die Außentemperaturen sind häufig deutlich höher als die niedrige Außentemperatur, für die die Anlage bei Volllast ausgelegt ist.

In DE202010007146U1 umfasst die dortige als Temperierungseinrichtung bezeichnete Anlage neben dem als Wärmepumpe betreibbaren Kältemittelkreislauf zwei daran thermisch gekoppelte Thermospeicher. Dabei kann zumindest der eine Thermospeicher die Erwärmung des Fahrgastraums durch die Wärmepumpe unterstützen oder sogar zeitweise auch vollständig übernehmen. Jedoch ist eine derartige allein anlagenseitige Regelung mit Einsatz von Thermospeichern ebenfalls für einen Betrieb im Teillastbereich unzureichend beziehungsweise ineffizient. So läuft der Verdichter im in DE202010007146U1 offenbarten Ausführungsbeispiel nur ungeregelt entweder mit einer Leistung oder ist ganz ausgestellt.

Die in DE19609048A1 und in DE102012108317A1 jeweils offenbarten Anlagen enthalten zwar einen Thermospeicher aber nur einen Kältemittelkreislauf, der im Klimabetrieb zum Kühlen aber nicht als Wärmepumpe zum Heizen ausgebildet ist. Bei der in DE10146477A1 offenbarten Fahrzeugklimaanlage ist der Kältemittelkreislauf zwar auch als Wärmepumpe zum Heizen betreibbar, aber die dortige thermische Speichervorrichtung ist lediglich ein thermischer Speichertank für ein flüssiges Kühlmittel eines mit dem Kältemittelkreislauf thermisch gekoppelten Kühlmittelkreislaufs. In DE102016117545A1 ist eine Heizungsanlage mit Wärmepumpe und Thermospeicher offenbart, bei der in der einen Ausführung die Verdichterleistung nicht regelbar ist und in der anderen Ausführung der Thermospeicher nicht an den Hochdruckbereich des Kältemittelkreislaufs thermisch gekoppelt ist.

Demgegenüber offenbart EP1262347A2 zwar eine Anlage mit regelbarer Verdichterleistung, aber die zusätzlich anlagenseitige Regelung des Hochdrucks im bis zum ersten Expansionsorgan bestehenden Hochdruckbereich des dortigen Kältemittelkreislaufs ist in seinem Umfang und seiner Regelungsart zu eingeschränkt sowie unzureichend offenbart. Bei der in DE102014221930A1 offenbarten Anlage erfolgt nur eine Steuerung der Verdichterleistung um die Kältemitteltemperatur zu regeln.

In WO2012/146368A1 ist eine Heiz- und Klimaanlage für ein Fahrzeug offenbart, die über einen Kältemittelkreislauf und einen Wärmetransportmittelkreislauf verfügt, wobei sie einen Thermospeicher mit einem Phasen-Wechsel-Material aufweist, der an die Hochdruckseite des Kältemittelkreislaufs thermisch gekoppelt ist. Dabei wird aber die gespeicherte Wärme des Thermospeichers über den Wärmetransportkreislauf zum Abtauen des Außenwärmetauschers im Abtaumodus eingesetzt.

Der im Anspruch 1 angegebenen Erfindung liegt also das Problem zugrunde, dass Anlagen für ein Elektro- oder Hybridfahrzeug mit einem als Wärmepumpe zum Heizen von Luft für und/oder in zumindest eine(n)/m Teil eines Fahrzeuginnenraums betreibbaren Kältemittelkreislauf mit regelbarer Verdichterleistung bisher insbesondere hinsichtlich ihrer Effizienz nur unzureichend bei Teillast betreibbar sind.

Ein entsprechendes Problem liegt bezüglich der Bereitstellung eines Elektro- oder Hybridfahrzeugs mit einer derartigen Anlage zugrunde.

Ein entsprechendes Problem liegt auch bezüglich eines Verfahrens zum Steuern einer derartigen Anlage für das Heizen oder Kühlen von Luft für und/oder in zumindest eine(n)/m Teil eines Fahrzeuginnenraums eines Elektro-oder Hybridfahrzeugs zugrunde.

### Zusammenfassung der Erfindung:

Das der im Anspruch 1 angegebenen Erfindung zugrundeliegende Problem wird durch die im Anspruch 1 aufgeführten Merkmale gelöst. Dadurch, dass die Anlage für ein Elektro- oder Hybridfahrzeug mit einem als Wärmepumpe zum Heizen von Luft für und/oder in zumindest eine(n)/m Teil eines Fahrzeuginnenraums betreibbaren und wenigstens einen Verdichter, wenigstens einen als Kondensator oder Gaskühler betreibbaren Wärmetauscher, wenigstens ein Expansionsorgan sowie wenigstens einen weiteren als Verdampfer betreibbaren Wärmetauscher umfassenden Kältemittelkreislauf ausgebildet ist, wobei die Verdichterleistung regelbar ist und wobei die Anlage einen an den Hochdruckbereich des als Wärmepumpe betreibbaren Kältemittelkreislaufs thermisch gekoppelten oder thermisch koppelbaren Thermospeicher mit einem Phasen-Wechsel-Material als Wärmespeicher umfasst und die Anlage eine Steuerung umfasst, die ausgebildet ist, dass mittels ihr die Anlage bei Wärmepumpenbetrieb derart steuerbar ist, dass, je geringer der Wärmebedarf ist, vorrangig die Leistung des wenigstens einen Verdichters verringert wird und nachrangig im Thermospeicher gespeicherte Wärme zur Deckung des Wärmebedarfs für das Heizen von Luft für und/oder in zumindest eine(n)/m Teil eines Fahrzeuginnenraums geregelt freigegeben wird, wird das Problem gelöst.

Mit der erfindungsgemäßen Kombination aus verdichterseitiger Regelung und anlagenseitiger Regelung mit ein Phasen-Wechsel-Material zum Speichern von insbesondere latenter Wärme umfassenden Thermospeicher lässt sich die Anlage insbesondere hinsichtlich ihres Betriebes bei Teillast, wie bei geringer Differenz von Außentemperatur zur Sollwert der Fahrzeuginnenraumlufttemperatur, effizient steuern und betreiben. Damit sind der Energieverbrauch und somit auch die Kosten insbesondere bei Teillastbetrieb gering. Eine Batterie eines Elektrofahrzeugs wird damit nur wenig belastet, sodass die Reichweite des Elektrofahrzeugs erhöht ist. Ferner ist die Gefahr verringert, dass der Verdichter auf zu geringer Leistung läuft oder zu oft getaktet werden muss und so Schaden nehmen könnte. Dadurch ist der Betrieb der Anlage mit Thermospeicher auch bei geringem Wärmebedarf besonders effektiv und somit energiesparend.

In den Unteransprüchen sind vorteilhafte Ausgestaltungen, Weiterbildungen und Verbesserungen des jeweiligen Gegenstandes der Erfindung angegeben.

Vorzugsweise ist die Anlage derart ausgebildet, dass die Verdichterleistung über die Drehzahl bzw. Frequenz des wenigstens einen Verdichters und/oder über Kurzschlussverbindung von Kältemittel zwischen Zylindern des wenigstens einen Verdichters mittels regelbaren Ventils und/oder über Absperrung des Saugraums des wenigstens einen Verdichters mittels regelbaren Ventils regelbar ist. Diese drei Ausgestaltungen für die Regelung der Verdichterleistung sind besonders wirksam und effizient, sowie wenig anfällig.

Gemäß einer vorteilhaften Weiterbildung ist die Anlage umschaltbar auch als Klimaanlage zum Kühlen von Luft für und/oder in zumindest eine(n)/m Teil eines Fahrzeuginnenraums betreibbar ausgebildet, wobei zumindest der wenigstens eine für den Wärmepumpenbetrieb einsetzbare Verdichter auch als wenigstens ein Verdichter im Kältemittelkreislauf des Klimaanlagenbetriebs angeordnet ist. Damit ist die Anlage in ihrem Anwendungsbereich vorteilhaft erweitert, wobei ebenfalls die Vorteile insbesondere bei Teillastbetrieb als Wärmepumpe ebenso insbesondere bei Teillastbetrieb als Klimaanlage gegeben sind. Die Effizienz der erfindungsgemäßen Anlage ist insbesondere bei geringem Kühlbedarf als Klimaanlage wie bei nur gering höherer Außentemperatur als der Sollwert der Fahrzeuginnenraumlufttemperatur besonders gut. Energieverbrauch und Kosten sind so relativ niedrig.

Gemäß einer vorteilhaften Ausgestaltung sind bei der Anlage der als Kondensator oder Gaskühler betreibbare Wärmetauscher umschaltbar als Verdampfer betreibbar und der als Verdampfer betreibbare weitere Wärmetauscher umschaltbar als Kondensator oder Gaskühler betreibbar. Dadurch können die Wärmetauscher sowohl bei dem Betrieb der Anlage als Klimaanlage als auch bei dem Betrieb als Wärmepumpe im Kältemittelkreislauf eingesetzt werden. So kann für den Kältemittelbetrieb und den Wärmepumpenbetrieb im Wesentlichen derselbe Kältemittelkreislauf beziehungsweise können im Wesentlichen dieselben Komponenten im Kältemittelkreislauf eingesetzt werden.

Vorzugsweise umfasst die Anlage einen an den Niedrigdruckbereich des als Klimaanlage betreibbaren Kältemittelkreislaufs thermisch gekoppelten oder thermisch koppelbaren weiteren Thermospeicher mit einem Phasen-Wechsel-Material als Kältespeicher. Damit lässt sich im Zusammenspiel mit der regelbaren Verdichterleistung auch im Klimaanlagenbetrieb die Anlage besonders gut und effizient insbesondere bei Teillast regeln.

Nach einer vorteilhaften Ausgestaltung der Anlage liegt die thermische Speicherkapazität von jedem der beiden Thermospeicher in kWh im Verhältnis zur maximalen Anlagenleistung in kW im Bereich von 1% bis 20%. In diesem Bereich sind die Thermospeicher nicht zu groß, ermöglichen aber dennoch eine signifikante Verbesserung der Effizienz insbesondere im Teillastbetrieb der Anlage, wobei besonders vorteilhaft das Verhältnis im Bereich von 4% bis 10% ist.

Für eine Anlage, die zum Heizen sowie Kühlen von Luft für und/oder in eine(n)/m Fahrgastraum eines Elektro- oder Hybridfahrzeugs zur Personenbeförderung vorgesehen ist, ist eine thermische Speicherkapazität von jedem der beiden Thermospeicher, die im Bereich von über 0,5 kWh bis einschließlich 1,5 kWh liegt, von Vorteil. Damit ist für eine derartige Anlage ohne übermäßig viel Raum zu benötigen ausreichend thermische Speicherkapazität vorhanden.

Hingegen ist für eine Anlage, die zum Heizen sowie Kühlen von Luft für und/oder in de(n)/m Fahrerplatzbereich des Fahrzeuginnenraums vorgesehen ist, eine thermische Speicherkapazität von jedem der beiden Thermospeicher im Bereich von nur 0,1 kWh bis einschließlich 0,5 kWh von Vorteil. Für eine derartige mit recht wenig Raumbedarf kleine Anlage ist dann trotzdem noch für eine effektive Regelung insbesondere bei Teillastbetrieb ausreichend thermische Speicherkapazität vorhanden.

Von Vorteil vor allem bei geringem Kühlbedarf ist auch die Ausbildung der Steuerung, dass mittels ihr die Anlage bei Klimaanlagenbetrieb derart steuerbar ist, dass, je geringer der Kühlbedarf ist, vorrangig die Leistung des wenigstens einen Verdichters verringert wird und nachrangig im weiteren Thermospeicher gespeicherte Kälte zur Deckung des Kühlbedarfs für das Kühlen von Luft für und/oder in zumindest eine(n)/m Teil eines Fahrzeuginnenraums geregelt freigegeben wird.

Nach einer Ausführungsform umfasst die Anlage eine Regelung des Hochdrucks des Kältemittels im Hochdruckbereich des Kältemittelkreislaufs, die ausgebildet ist, den Hochdruck im Vergleich zum Druckwert eines nicht reduzierten Hochdrucks um einen regelbaren Druckwert im Bereich von bis zu 50% des Auslegungshochdrucks (PS) oder innerhalb eines Teilbereichs davon zu reduzieren, wobei der Druckwert des Hochdrucks des Kältemittels über dem des Verdampfungsdrucks bei 20° C liegt.

Der Auslegungshochdruck (PS) ist der vom Hersteller der Anlage festgelegte höchste Druck, für den die Anlage beziehungsweise ihr Hochdruckbereich ausgelegt ist. Der Auslegungsdruck (PS) ist also der Grenzwert, der weder bei eingeschalteter noch bei ausgeschalteter Anlage überschritten werden soll.

Vorteilhaft ist die Steuerung der Anlage so ausgebildet, dass mittels ihr die Anlage bei Wärmepumpenbetrieb derart steuerbar ist, dass die Höhe der Leistung sowie die Länge der relativen Einschaltzeit des wenigstens einen Verdichters sich gegenläufig, vorzugsweise reziprok, zur Höhe der Außentemperatur verhalten. Dadurch ist die Anlage im Heizbetrieb besonders effektiv und somit energiesparend. Entsprechend vorteilhaft ist eine Weiterbildung, bei der die Steuerung der Anlage so ausgebildet ist, dass mittels ihr die Anlage bei Klimaanlagenbetrieb derart steuerbar ist, dass die Höhe der Leistung sowie die Länge der relativen Einschaltzeit des wenigstens einen Verdichters sich gleichläufig, vorzugsweise proportional, zur Höhe der Außentemperatur verhalten. Dadurch ist die Anlage im Kühlbetrieb besonders effektiv und somit energiesparend.

Die relative Einschaltzeit des Verdichters ist das Verhältnis der Zeiten, in der der Verdichter eingeschaltet ist, zu der Gesamtzeit, die aus der Summe aus Einschaltzeit und der Zeit, in der der Verdichter ausgeschaltet ist, gebildet wird.

Gemäß einer vorteilhaften Ausgestaltung der Anlage ist die Steuerung so ausgebildet, dass mittels ihr der Hochdruck des Kältemittels im Hochdruckbereich des Kältemittelkreislaufs durch Kältemittelverlagerung in oder aus ein/em Speichervolumen für Kältemittel und/oder in oder aus eine(n)/m momentan sonst ungenutzten Bereich des Kältemittelkreislaufs regelbar ist. Eine derartige Regelungsmöglichkeit des Hochdrucks ist stufenlos und unkompliziert. Dadurch, dass die Masse von Kältemittel im aktiven Kältemittelkreislauf damit variabel einstellbar ist, lässt sich der Hochdruck im Hochdruckbereich besonders gut auf einen gewünschten Druckwert einstellen. Eine besonders vorteilhafte Ausbildung der Anlage ist die Regelbarkeit der Kältemittelverlagerung in oder aus eine(n)/m im Kältemittelkreislauf momentan sonst ungenutzten Kondensator- oder Gaskühlerbereich eines der Wärmetauscher. Dadurch wird auf einfache Weise sonst gerade ungenutzter Kältemittelspeicherplatz nutzbar gemacht. Ein extra Kältemittelspeicher ist somit für die Kältemittelverlagerung platzsparend entbehrlich.

Vorzugsweise ist die Steuerung der Anlage so ausgebildet, dass mittels ihr die Anlage bei Wärmepumpenbetrieb derart steuerbar ist, dass, je geringer der Wärmebedarf ist, vorrangig die Leistung des Verdichters verringert wird und nachrangig der Hochdruck des Kältemittels im Hochdruckbereich des Kältemittelkreislaufs verringert wird. Damit ist ein energiesparender Betrieb der Anlage auch bei geringem Wärmebedarf ermöglicht. Die Effizienz der Regelung der Leistung des Verdichters ist, sofern der Wärmebbedarf nicht zu gering ist, im Vergleich zur Regelung des Hochdrucks durch Kältemittelverlagerung normalerweise höher. Entsprechend ist ebenso eine Anlage mit einer derart ausgebildeten Steuerung von Vorteil, mittels der die Anlage bei Klimaanlagenbetrieb so steuerbar ist, dass, je geringer der Kühlbedarf ist, vorrangig die Leistung des Verdichters verringert wird und nachrangig der Hochdruck des Kältemittels im Hochdruckbereich des Kältemittelkreislaufs verringert wird. Damit ist ein energiesparender Betrieb der Anlage auch bei geringem Kühlbedarf ermöglicht.

Schließlich können die Merkmale der Unteransprüche für die erfindungsgemäße Anlage im Wesentlichen frei miteinander und nicht durch die den Ansprüchen vorliegende Reihenfolge festgelegt kombiniert werden, sofern sie unabhängig voneinander sind und sich nicht gegenseitig ausschließen.

Mit einem Elektro- oder Hybridfahrzeug, das eine erfindungsgemäße Anlage umfasst, wird das dem der erfindungsgemäßen Anlage zugrundeliegende Problem entsprechende Problem hinsichtlich eines Elektro- oder Hybridfahrzeugs gelöst. Bezüglich vorteilhafter Ausgestaltungen und Weiterbildungen und deren Vorzüge wird auf die entsprechenden obigen Angaben zur erfindungsgemäßen Anlage verwiesen.

Das entsprechende Problem bezüglich eines Verfahrens wird durch ein Verfahren zum Steuern einer erfindungsgemäßen Anlage für das Heizen oder Kühlen von Luft für und/oder in zumindest eine(n)/m Teil eines Fahrzeuginnenraums eines Elektro- oder Hybridfahrzeugs gemäß Anspruch 13, wobei je nach Heiz-oder Kühlbedarf die Verdichterleistung geregelt wird und kumulativ oder im Wechsel zur Regelung der Verdichterleistung je nach Heiz- oder Kühlbedarf gespeicherte Wärme oder gespeicherte Kälte in wenigstens einem Thermospeicher für das Heizen oder das Kühlen geregelt freigegeben wird und vorrangig die Verdichterleistung geregelt und nachrangig dazu je nach Heiz- oder Kühlbedarf gespeicherte Wärme oder gespeicherte Kälte im wenigstens einen Thermospeicher für das Heizen oder die Kühlen geregelt freigegeben werden, gelöst.

Mit einem derartigen Verfahren lässt sich insbesondere im Teillastbetrieb die Anlage effizient steuern und betreiben. Damit sind der Energieverbrauch und somit auch die Kosten insbesondere bei Teillastbetrieb der Anlage gering. Eine Batterie eines Elektrofahrzeugs wird so nur wenig belastet. Ferner lässt sich mit dem Verfahren die Gefahr verringert, dass der Verdichter auf zu geringer Leistung läuft oder zu oft getaktet werden muss und so Schaden nehmen könnte.

Vorzugsweise werden bei dem erfindungsgemäßen Verfahren kumulativ oder im Wechsel zur Regelung der Verdichterleistung je nach Heiz- oder Kühlbedarf der Hochdruck des Kältemittels im Hochdruckbereich des Kältemittelkreislaufs geregelt, wobei der Hochdruck im Vergleich zum Druckwert eines nicht reduzierten Hochdrucks um einen regelbaren Druckwert im Bereich von bis zu 50% des Auslegungshochdrucks (PS) oder innerhalb eines Teilbereichs davon reduziert wird und der Druckwert des Hochdrucks des Kältemittels über dem des Verdampfungsdrucks bei 20° C liegt, und nachrangig zur Regelung der Verdichterleistung je nach Heiz- oder Kühlbedarf der Hochdruck des Kältemittels im Hochdruckbereich des Kältemittelkreislaufs geregelt. Mit einem derartigen Verfahren zum Steuern einer erfindungsgemäßen Anlage mit Thermospeicher und Hochdruckregelung lässt sich die Anlage auch bei geringem Wärme- oder Kältebedarf besonders effektiv und damit energiesparend betreiben.

Nach einer vorteilhaften Ausführung des Verfahrens werden bei Wärmepumpenbetrieb der Anlage die Höhe der Leistung sowie die Länge der relativen Einschaltzeit des wenigstens einen Verdichters gegenläufig, vorzugsweise reziprok, zur Höhe der Außentemperatur geregelt. Dadurch läuft die Anlage im Heizbetrieb besonders effektiv und somit energiesparend. Entsprechend vorteilhaft im Klimaanlagenbetrieb der Anlage ist eine Ausführung des Verfahrens, bei der die Höhe der Leistung sowie die Länge der relativen Einschaltzeit des wenigstens einen Verdichters gleichläufig, vorzugsweise proportional, zur Höhe der Außentemperatur geregelt werden.

Vorzugsweise wird bei dem Verfahren die Verdichterleistung über die Drehzahl beziehumgsweise Frequenz des Verdichters und/oder über Kurzschlussverbindung von Kältemittel zwischen Zylindern des Verdichters mittels regelbaren Ventils und/oder über Absperrung des Saugraums des Verdichters mittels regelbaren Ventils geregelt. Diese drei Steuermöglichkeiten der Verdichterleistung sind besonders wirksam und effizient sowie wenig anfällig.

Schließlich können die Merkmale der Unteransprüche für das erfindungsgemäße Verfahren im Wesentlichen frei miteinander und nicht durch die den Ansprüchen vorliegende Reihenfolge festgelegt kombiniert werden, sofern sie unabhängig voneinander sind und sich nicht gegenseitig ausschließen.

### Kurze Beschreibung der Zeichnungen:

Anhand der Zeichnungen werden Ausführungsbeispiele der Erfindung erläutert.

### Es zeigen

Fig. 1 ein Ausführungsbeispiel einer erfindungsgemäßen Anlage mit Kältemittelkreislauf und zwei Thermospeichern;
Fig. 2 eine graphische Darstellung von insbesondere Heiz-und Kühlanforderungen für einen Omnibus abhängig von Umgebungstemperatur und Sollwert der Fahrzeuginnenraumtemperatur;
Fig. 3 ein weiteres Ausführungsbeispiel einer erfindungsgemäßen Anlage mit Kältemittelkreislauf und Hochdruckregelung;
Fig. 4 ein Elektro-oder Hybridfahrzeug mit einem Ausführungsbeispiel einer erfindungsgemäßen Anlage;
Fig. 5 in Darstellung eines Flussdiagramms ein Verfahren zum Steuern des in Figur 1 gezeigten Ausführungsbeispiels einer erfindungsgemäßen Anlage; und
Fig. 6 in Darstellung eines Flussdiagramms ein Verfahren zum Steuern des in Figur 3 gezeigten Ausführungsbeispiels einer erfindungsgemäßen Anlage.

### Ausführliche Beschreibung der Erfindung:

Alle Zeichnungen sind schematisch zu verstehen. Auf maßstabsgetreue Abbildungen wurde zum Zwecke erhöhter Klarheit der Darstellung verzichtet.

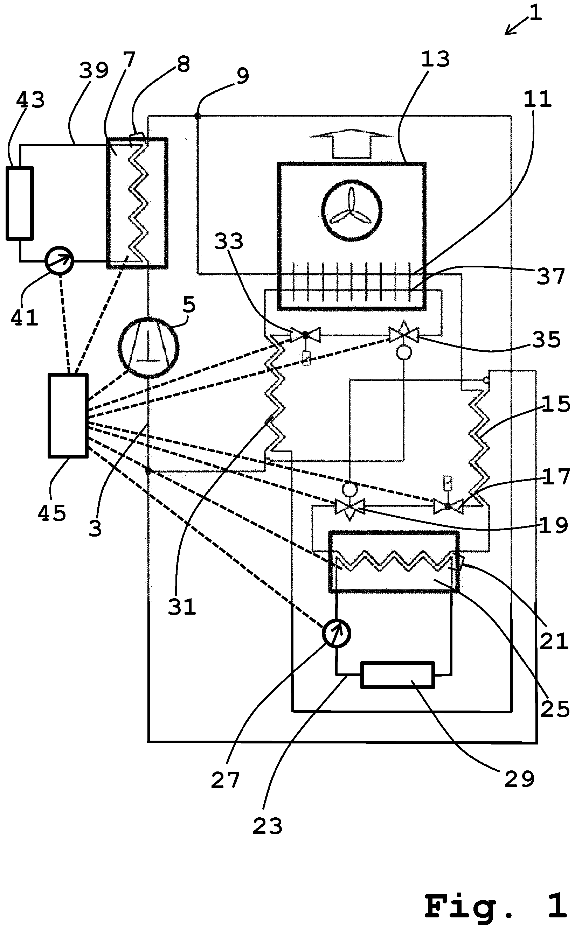

In Figur 1 ist eine Anlage 1 für ein Elektro- oder Hybridfahrzeug mit einem sowohl als Wärmepumpe zum Heizen als auch als Klimaanlage zum Kühlen von Luft für und/oder in zumindest eine(n)/m Teil eines Fahrzeuginnenraums betreibbaren Kältemittelkreislauf 3 dargestellt. Im Kältemittelkreislauf 3 ist ein Verdichter 5 zum Komprimieren des Kältemittels, wie beispielsweise Kohlendioxid CO2, angeordnet. An die Kältemittelleitung im Hochdruckbereich stromabwärts des Verdichters 5 ist ein Thermospeicher 7 als Wärmespeicher thermisch gekoppelt. Das thermische Speichermaterial umfasst im Wesentlichen ein Phasen-Wechsel-Material, wie in diesem Fall Stearylalkohol mit einem Schmelzpunkt von ca. 56 °C. Aber auch andere für Wärmespeicherung bekannte Phasen-Wechsel-Materialien wie zum Beispiel Paraffin sind denkbar. Bei dem Phasen-Wechsel-Material im Thermospeicher 7 wird Wärme insbesondere als latente Wärme gespeichert. Die Speicherung als latente Wärme erfolgt beispielsweise durch einen Phasen-Wechsel von fest nach flüssig. In diesem Ausführungsbeispiel führt die Kältemittelleitung durch den Wärmetauscher 8, an dem direkt das Speichermaterial des Thermospeichers 7 angeordnet ist, sodass wegen dieser thermischen Kopplung bei Betrieb der Anlage 1 eine Wärmeübertragung vom komprimierten heißen Kältemittel an das Speichermaterial des Thermospeichers 7 ermöglicht ist. Es sind auch andere Arten von thermischer Kopplung denkbar, wie beispielsweise eine spiralförmige Kältemittelleitung um den Behälter mit dem Speichermaterial des Thermospeichers 7 anliegend herum. Auch eine zusätzliche mit einem Ventil wie beispielsweise einem Magnetventil schaltbare Bypass-Kältemittelleitung zum Thermospeicher 7 ist als Variante denkbar, sodass damit eine thermische Kopplung des Kältemittelkreislaufs 3 zum Thermospeicher 7 zu- und abschaltbar ist. In Kältemittelleitung stromabwärts vom als Gaskühler oder Kondensator betreibbaren Wärmetauscher 8 mit seinem direkt anliegenden Thermospeicher 7 befindet sich eine Verzweigung 9 der Kältemittelleitung. Der eine danach folgende Kältemittelleitungsstrang führt stromabwärts in den Kondensator- oder Gaskühlerbereich 11 des als Kältemittel-Luft-Wärmetauscher ausgebildeten Wärmetauschers 13. Dieser Wärmetauscher 13 ist als Außenluftwärmetauscher einsetzbar. Bei transkritischem Betrieb der Anlage 1 mit Kohlendioxid CO2 als Kältemittel ist der Wärmetauscher 13 als Gaskühler betreibbar. Denkbar ist auch eine Anlage 1, die auf einen unterkritischen Betrieb mit beispielsweise dem Kältemittel R-134a oder R-1234yf ausgerichtet ist, sodass ihr Wärmetauscher 13 dann als Kondensator betreibbar sein würde. Vom Kondensator- oder Gaskühlerbereich 11 des Wärmetauschers 13 führt die Kältemittelleitung stromabwärts durch den optionalen Innenwärmetauscher 15 zum als Magnetventil ausgebildeten Ventil 17. Als Ventil 17 kämen auch andere bekannte Arten von schaltbaren Ventilen in Betracht. Im besagten Kältemittelleitungsstrang nach dem Ventil 17 ist ein Expansionsorgan 19 zum Entspannen des Kältemittels angeordnet. Vom Ausgang des Verdichters 5 bis zum Expansionsorgan 19 reicht der Hochdruckbereich und ab dem Expansionsorgan 19 bis zum Saugeingang des Verdichters 5 der Niedrigdruckbereich des Kältemittelkreislaufs 3. Das Expansionsorgan 19 ist in diesem Ausführungsbeispiel als geregeltes Expansionsventil ausgebildet. Nach dem Expansionsorgan 19 also im Kältemittelkreislauf 3 stromabwärts führt eine Kältemittelleitung in den als Verdampfer betreibbaren Wärmetauscher 21. Der Wärmetauscher 21 ist in diesem Ausführungsbeispiel ohne darauf beschränkt zu sein als Kältemittel-Flüssigkeits-Wärmetauscher ausgebildet. Dabei wird der Kühlflüssigkeit wie beispielsweise Wasser oder Wasser-Glykol-Gemisch eines sekundären Kühlkreislaufs 23 vom verdampfenden Kältemittel Wärme entzogen und damit abgekühlt. Der Wärmetauscher 21 ist direkt an einen weiteren Thermospeicher 25 angrenzend, der ein Phasen-Wechsel-Material als wesentlicher Bestandteil eines thermischen Speichermediums enthält. Somit steht der Wärmetauscher 21 in Wärmetauschverbindung mit einem als Kältespeicher betreibbarer weiterer Thermospeicher 25, der folglich an den Kältemittelkreislauf 3 im Niedrigdruckbereich thermisch gekoppelt ist. Als dortiges Phasen-Wechsel-Material eignet sich zum Beispiel Wasser, das zwischen der festen Phase nämlich Eis und der flüssigen Phase wechseln kann. Vom Wärmetauscher 21 führt die Kältemittelleitung durch den optionalen Innenwärmetauscher 15 zum Saugeingang des Verdichters 5. Sofern in der Anlage 1 dieser beschriebene Kältemittelleitungsstrang freigeschaltet ist, ist sie als Klimaanlage betreibbar, bei der über den sekundären Kühlkreislauf 23 Luft für und/oder in zumindest eine(n)/m Teil eines Fahrzeuginnenraums kühlbar ist. Die abgekühlte Kühlflüssigkeit wird dafür mittels der Pumpe 27 zu zumindest einem Wärmetauscher 29 beispielsweise für einen Fahrgastraum gepumpt. Zusätzlich können auch noch mit dem Kühlkreislauf 23 beispielsweise ein Antriebsaggregat wie die Batterie eines Elektro- oder Hybridfahrzeugs kühlbar sein.

Der andere von der Verzweigung 9 abzweigende Kältemittelleitungsstrang führt durch den optionalen Innenwärmetauscher 31 zum als Magnetventil ausgebildeten weiteren Ventil 33. Als Ventil 33 kämen auch andere bekannte Arten von schaltbaren Ventilen in Betracht. In diesem anderen Kältemittelleitungsstrang ist nach dem Ventil 33 ein Expansionsorgan 35 zum Entspannen des Kältemittels angeordnet. Das Expansionsorgan 35 ist in diesem Ausführungsbeispiel als geregeltes Expansionsventil ausgebildet. Nach dem Expansionsorgan 35 also im Kältemittelkreislauf 3 stromabwärts führt eine Kältemittelleitung in den Verdampferbereich 37 des Wärmetauschers 13. Kältemittel, das durch diesen Verdampferbereich 37 strömt, nimmt beim Verdampfen Wärme auf. Sofern der Wärmetauscher 13 als Außenluftwärmetauscher eingesetzt wird, wird, sofern er als Verdampfer betrieben wird, Wärme von der Außenluft aufgenommen. Vom Verdampferbereich 37 des Wärmetauschers 13 führt die Kältemittelleitung durch den optionalen Innenwärmetauscher 31 zum Saugeingang des Verdichters 5. Sofern in der Anlage 1 dieser beschriebene andere Kältemittelleitungsstrang freigeschaltet ist, ist sie als Wärmepumpe betreibbar, bei der über den sekundären an den in diesem Fall als Kältemittel-Flüssigkeits-Wärmetauscher ausgebildeten Wärmetauscher 8 angeschlossenen Heizkreislauf 39 Luft für und/oder in zumindest eine(n)/m Teil eines Fahrzeuginnenraums heizbar ist. Das Heizmittel ist in diesem Heizkreislauf Wasser. Mittels einer Pumpe 41 wird das erwärmte Wasser zum Heizen zu dem zumindest einen Heizwärmetauscher 43, wie beispielsweise einem Konvektor, der für einen Fahrgastraum vorgesehen ist, gepumpt. Die Steuerung 45, wie beispielsweise ein mit Mikroprozessor zum Berechnen und Regeln der Steuersignale ausgestattete Einheit, steuert die beiden Ventile 17 und 33 und damit die Betriebsart der Anlage als Wärmepumpe oder Klimaanlage. Ferner wird mittels der Steuerung 45 die Leistung des Verdichters 5 geregelt. In diesem Ausführungsbeispiel wird die Frequenz beziehungsweise Drehzahl des Verdichters 5 geregelt, also die Höhe der Drehzahl des elektrischen Verdichtermotors. So ist die Drehzahl des Verdichters 5 zum Beispiel mit einem steuerbaren Frequenzumrichter zwischen 30 Hz und 50 Hz regelbar. Denkbar sind auch andere Arten der Regelung der Verdichterleistung. Eine solche Variante ist zum Beispiel die Regelung der Verdichterleistung über Zylinderbankabschaltung, also die Regelung einer Kurzschlussverbindung von Kältemittel zwischen Zylindern des Verdichters 5 mittels über die Steuerung 45 regelbaren Ventils dafür. Eine weitere Variante ist beispielsweise eine mit Magnetventil regelbare Absperrung des Saugraums einzelner Zylinder des Verdichters 5. Über mittels der Steuerung 45 erfolgende Regelung der Höhe der Frequenz der Absperrung durch das Magnetventil ist bei einem derartigen Verdichter quasi eine stufenlose Regelung der Verdichterleistung möglich.

Eine weitere Variante ist ein Verdichter 5, bei dem die Regelung des Verdichters 5 über Änderung des Hubvolumens wie beispielsweise in DE19607032A1 beschrieben erfolgt. Dabei wird über eine Schrägscheibe oder Schwenkscheibe die Auslenkung des Kolbens bei einem Axialkolbenverdichter verändert. In Verbindung mit einer festen Drehzahl eines Elektromotors kann diese Regelung zur Anpassung an die benötigte Leistung verwendet werden. Durch die verkürzte Auslenkung der Kolben nimmt dabei das Fördervolumen des Verdichters 5 ab. Bei einer Variante mit mehreren parallelen Verdichtern 5 kann man eine stufige Abschaltung erreichen und so die Verdichterleistung regeln. Eine weitere Art der Regelung der Verdichterleistung stellt eine von der Steuerung 45 gesteuerte Drosselung der Ansaugleitung des Verdichters 5 durch variables Sauggasdrosselventil dar, wobei der Druck und die Gasdichte am Saugeingang des Verdichters 5 verringert werden können. Dadurch wird wie in DE102006060259A1 beschrieben weniger Massestrom des Kältemittels gefördert und die Leistung nimmt ab.

Zusätzlich zur Regelung der Verdichterleistung regelt im Wärmepumpenbetrieb die Steuerung 45 die Wärmeabgabe von im Thermospeichers 7 gespeicherter Wärme zum Heizen von Luft für und/oder in zumindest eine(n)/m Teil eines Fahrzeuginnenraums. Diese Regelung kann beispielsweise über ein geregeltes Zuschalten eines Heizmittelleitungsabschnitts des sekundären Heizkreislaufs 39 durch das thermische Speichermedium des Thermospeichers 7 erfolgen. Ferner ist denkbar, dass die Freigabe von im Thermospeicher 7 gespeicherter Wärme nicht durch eine separate Regelung erfolgt, sondern mit dem Wärmeaustausch des Kältemittels des Kältemittelkreislaufs 3 mit dem Heizmittel des Heizkreislaufs 39 im Wärmetauscher 8 gekoppelt ausgestaltet ist. So erfolgt die Regelung der Speicherung und Freigabe von im Thermospeicher 7 gespeicherter Wärme indirekt durch die Regelung einerseits der Leistung des Verdichters 5 bis hin zum zeitweisen Abschalten des Verdichters 5 und andererseits durch die ebenfalls von der Steuerung 45 gesteuerten Leistung der Pumpe 41 bis hin zu deren Ein- und Ausschalten im sekundären Heizkreislauf 39.

Die Steuerung 45 steuert anhand der empfangenen Daten erstens vom in Figur 1 aus Gründen der Übersichtlichkeit nicht dargestellten Außentemperatursensor, zweitens vom in Figur 1 aus Gründen der Übersichtlichkeit nicht dargestellten Fahrzeuginnenraumtemperatursensor, drittens vom momentanen Umfang der im Thermospeicher 7 gespeicherten Wärme und viertens dem für die Lufttemperatur im Fahrzeuginnenraum vorgegeben Sollwert die Leistung des Verdichters 5 und die Freigabe von Wärme aus dem Thermospeicher 7. Diese Regelung erfolgt hinsichtlich einer insbesondere bezüglich der Effizienz der Anlage 1 optimierten Berechnung, die entweder die Steuerung 45 selbst vornimmt, oder die vorab durchgeführt und deren Ergebnisse der Steuerung 45 als Steueranweisungen abhängig von den jeweils gemessenen Werten und dem für die Lufttemperatur im Fahrzeuginnenraum gewünschten Sollwert vorgegeben beziehungsweise in die Steuerung 45 vorab eingespeichert werden. Für den Klimaanlagenbetrieb der Anlage 1 regelt zusätzlich zur Regelung der Verdichterleistung die Steuerung 45 die Kälteabgabe beziehungsweise die Wärmeaufnahme des weiteren Thermospeichers 25 zum Kühlen von Luft für und/oder in zumindest eine(n)/m Teil eines Fahrzeuginnenraums. Entsprechend zum Heizbetrieb steuert die Steuerung 45 im Klimaanlagenbetrieb der Anlage 1 anhand der empfangenen Daten erstens vom

Außentemperatursensor, zweitens vom Fahrzeuginnenraumtemperatursensor, dritten vom momentanen Umfang der im weiteren Thermospeicher 25 gespeicherten Kälte beziehungsweise des Umfangs der noch speicherbaren Wärme für den vorgegebenen Sollwert der Fahrzeuginnraumtemperatur die Leistung des Verdichters 5 und die Freigabe von Kälte aus dem weiteren Thermospeicher 25 beziehungsweise die Aufnahme von Wärme in den weiteren Thermospeicher 25. Diese Regelung erfolgt hinsichtlich einer insbesondere bezüglich der Effizienz der Anlage 1 optimierten Berechnung für den Klimaanlagenbetrieb, die entweder die Steuerung 45 selbst vornimmt oder deren Ergebnisse ihr vorab vorgegeben beziehungsweise in ihr eingespeichert wurden.

Die Regelung der Kälteabgabe beziehungsweise Wärmeaufnahme des weiteren Thermospeichers 25 erfolgt beispielsweise über ein geregeltes Zuschalten eines Kühlmittelleitungsabschnitts des sekundären Kühlkreislaufs 23 durch das thermische Speichermaterial des weiteren Thermospeichers 25. Ferner ist denkbar, dass die Freigabe von im weiteren Thermospeicher 25 gespeicherter Kälter beziehungsweise Speicherung von Wärme nicht durch eine separate Regelung erfolgt, sondern durch eine indirekte Regelung. So erfolgt die Regelung der Speicherung und Freigabe von im weiteren Thermospeicher 25 gespeicherter Kälte bzw. dessen Wärmespeicherung indirekt durch die Regelung einerseits der Leistung des Verdichters 5 und damit der Aufnahmeleistung von Wärme durch das Kältemittel bis hin zum zeitweisen Abschalten des Verdichters 5 und andererseits durch die ebenfalls von der Steuerung 45 gesteuerten Leistung der Pumpe 27 bis hin zu deren Ein-und Ausschalten im sekundären Kühlkreislauf 23. Dabei beträgt ohne darauf beschränkt zu sein die thermische Speicherkapazität beider Thermospeicher 7, 25 in diesem Ausführungsbeispiel jeweils 1kWh. Die maximale Anlagenleistung beträgt ohne darauf beschränkt zu sein in diesem Ausführungsbeispiel 18 kW.

Das in Figur 1 dargestellte Ausführungsbeispiel einer Anlage 1 ist für ein Elektro- oder Hybridfahrzeug vorgesehen, wie insbesondere für einen Elektroomnibus oder Hybridomnibus. Aber auch eine Ausgestaltung der Anlage 1 für ein Schienenfahrzeug mit elektrischem Antrieb ist denkbar.

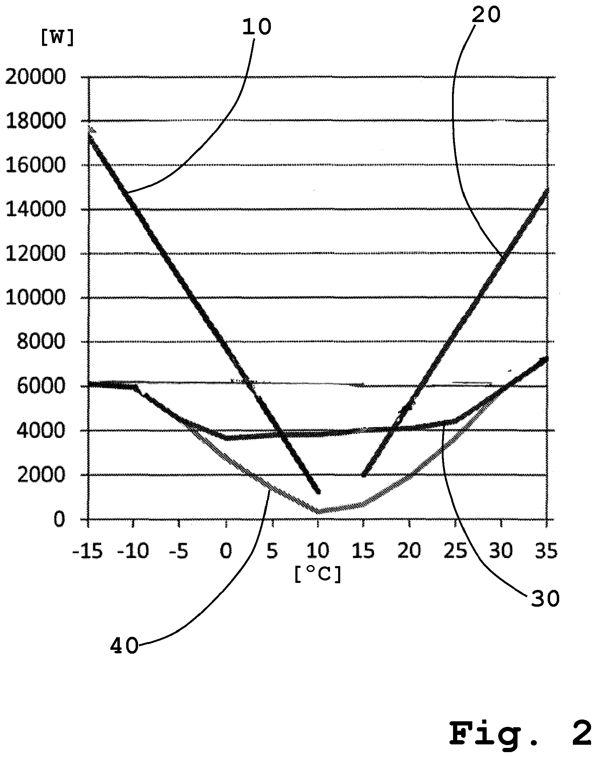

Figur 2 zeigt eine graphische Darstellung von insbesondere Heiz- und Kühlanforderungen für einen Omnibus abhängig von Umgebungstemperatur und Sollwert der Fahrzeuginnenraumtemperatur. Den berechneten Heiz- und Kühlanforderungen wie Heizbedarf 10 und Kühlbedarf 20 als Leistung in Watt (W) zugrunde gelegt ist bei einem Sollwert der Fahrzeuginnenraumtemperatur von 22 °C ein mit zweiundzwanzig Personen besetzter Omnibus mit einer Frischluftmenge pro Stunde von 870 m³/h mit üblich isolierter Karosserie. Es zeigt sich, dass im Außentemperaturbereich von -15 °C bis 10 °C der Heizbedarf 10 durch eine Anlage zum Heizen der Luft für und/oder in de(n)/m Fahrzeuginnenraum von ca. 17.000 W auf ca. 1000 W linear abfällt. Ab einer Außentemperatur von 15 °C steigt der Kühlbedarf 20 durch eine Anlage zum Kühlen der Luft für und/oder in de(n)/m Fahrzeuginnenraum von ca. 2.000 W auf ca. 15.000 W bei 35 °C Außentemperatur linear an. Die elektrische Leistung 30 in Watt (W) einer ohne Thermospeicher ausgestatteten elektrisch betrieben Anlage zum Heizen und Kühlen der Luft für und/oder in de(n)/m Fahrzeuginnenraum, bei der zur Leistungsanpassung lediglich die Verdichterleistung durch Regelung der Drehzahlen des Verdichters im Bereich zwischen 30 Hz und 50 Hz variabel ist, zeigt eine zu mittleren Außentemperaturen von ca. -5 °C bis ca. 25 °C leicht abgesenkte Kurve mit einem unteren Plateau von um die 4.000 W. Somit ist insbesondere in diesem Teillastbereich der Anlage die benötigte elektrische Leistung noch relativ hoch. Dagegen zeigt die Kurve für die elektrische Leistung 40 einer erfindungsgemäßen in Figur 1 gezeigten Anlage insbesondere im Bereich mittlerer Außentemperaturen von ca. -5 °C bis ca. 25 °C also bei Teillast eine deutlich stärkere Absenkung von bis hinunter zu ca. 350 W. Dieses bedeutet eine deutliche Einsparung von elektrischer Energie im Vergleich zu einer Anlage mit nur verdichterseitiger Leistungsregelung. Die erfinderische Anlage ist somit insbesondere im Teillastbereich deutlich effizienter als die Anlage ohne Thermospeicher. Der eine Thermospeicher der erfindungsgemäßen Anlage dient als Wärmespeicher und ist an den Hochdruckbereich des Kältemittelkreislaufs der erfindungsgemäßen Anlage thermisch gekoppelt und der weitere Thermospeicher dient als Kältespeicher und ist an den Niedrigdruckbereich des Kältemittelkreislaufs der erfindungsgemäßen Anlage thermisch gekoppelt.

Die Anlage ist mittels der Steuerung derart geregelt, dass je geringer der Wärmebedarf ist, also je höher die Außentemperatur ist, bei der noch von der Anlage ein Heizen erforderlich ist, vorrangig die Leistung des wenigstens einen Verdichters verringert wird und nachrangig im Thermospeicher gespeicherte Wärme zur Deckung des Wärmebedarfs für das Heizen von Luft für und/oder in de(n)/m Fahrzeuginnenraum geregelt freigegeben wird. Dabei wird also in dem Bereich von geringer Außentemperatur von -15 °C bis ca. -5 °C die Leistung der erfinderischen Anlage an den Wärmebedarf angepasst vorranging über die Veränderung der Drehzahl des Verdichters im Bereich von 50 Hz bis 30 Hz geregelt, sodass die Drehzahl des Verdichters und damit dessen Leistung sich gegenläufig zur Höhe der Außentemperatur verhält. Erst im Bereich von höherer Außentemperatur von ca. -5 °C bis ca. 12,5 °C wird je höher die Außentemperatur ist mehr und mehr das Heizen durch die Anlage über die Freigabe von im als Wärmespeicher eingesetzten Thermospeicher gespeicherter Wärme geregelt. Dieses zur Regelung der Verdichterleistung nachrangige Heizen durch Thermospeicher wird hin zu höheren Außentemperaturen wichtiger also deren Anteil erhöht sich, denn die kontinuierliche Verringerung der Verdichterleistung durch Drehzahlreduzierung ist durch das Minimum von 30 Hz begrenzt. Dabei verhalten sich die relative Einschaltzeit des Verdichters und die Drehzahl des Verdichters bis zum Minimum von 30 Hz weiterhin gegenläufig zur Höhe der Außentemperatur, bis schließlich im Außentemperaturbereich von ca. 10 °C bis ca. 12,5 °C nahezu vollständig der als Wärmespeicher eingesetzte Thermospeicher der Anlage das Heizen der Luft des Fahrzeuginnenraums übernimmt und der Verdichter des Kältemittelkreislaufs nur sehr selten kurzzeitig auf niedrigster Drehzahl von 30 Hz eingeschaltet wird. Die mittels der Steuerung geregelten Leistung und relative Einschaltzeit des Verdichters verhalten sich also im Wärmepumpenbetrieb der Anlage nahezu reziprok zur Höhe der Außentemperatur.

Im Außentemperaturbereich von ca. 12,5 °C bis 35 °C ist die erfindungsgemäße Anlage nicht mehr auf Wärmepumpenbetrieb sondern auf Klimaanlagenbetrieb zum Kühlen von Luft für und/oder in de(n)/m Fahrzeuginnenraum geschaltet. Die Steuerung steuert die Anlage derart, dass je geringer der Kühlbedarf ist, vorrangig die Leistung des Verdichters verringert wird und nachrangig im weiteren an den Niedrigdruckbereich des Kältemittelkreislaufs thermisch gekoppelte Thermospeicher gespeicherte Kälte zur Deckung des Kühlbedarfs für das Kühlen von Luft für und/oder in de(n)/m Fahrzeuginnenraum geregelt freigegeben wird. Dabei wird also in dem Bereich von hoher Außentemperatur von 35 °C bis hinunter zu ca. 28 °C die Leistung der erfinderischen Anlage an den Kühlbedarf angepasst vorranging über die Veränderung der Drehzahl des Verdichters im Bereich von 50 Hz bis 30 Hz geregelt, sodass die Drehzahl des Verdichters und damit dessen Leistung sich gleichläufig zur Höhe der Außentemperatur verhält. Erst im Bereich von niedrigerer Außentemperatur von ca. 28 °C bis ca. 12,5 °C wird, je niedriger die Außentemperatur ist, mehr und mehr das Kühlen durch die Anlage über die Freigabe von im als Kältespeicher eingesetzten weiteren Thermospeicher gespeicherte Kälte geregelt. Dieses zur Regelung der Verdichterleistung nachrangige Kühlen durch den weiteren Thermospeicher wird hin zu niedrigeren Außentemperaturen wichtiger also deren Anteil erhöht sich, denn die kontinuierliche Verringerung der Verdichterleistung durch Drehzahlreduzierung ist durch das Minimum von 30 Hz begrenzt. Dabei verhalten sich die relative Einschaltzeit des Verdichters und die Drehzahl des Verdichters bis zum Minimum von 30 Hz weiterhin gleichläufig, also nahezu proportional, zur Höhe der Außentemperatur, bis schließlich im Außentemperaturbereich von ca. 15 °C bis hinunter zu ca. 12,5 °C nahezu vollständig der als Kältespeicher eingesetzte weitere Thermospeicher der Anlage das Kühlen der Luft des Fahrzeuginnenraums übernimmt und der Verdichter des Kältemittelkreislaufs nur sehr selten kurzzeitig auf niedrigster Drehzahl von 30 Hz eingeschaltet wird. Die mittels der Steuerung geregelten Leistung und relative Einschaltzeit des Verdichters verhalten sich also im Klimaanlagenbetrieb der Anlage nahezu proportional zur Höhe der Außentemperatur.

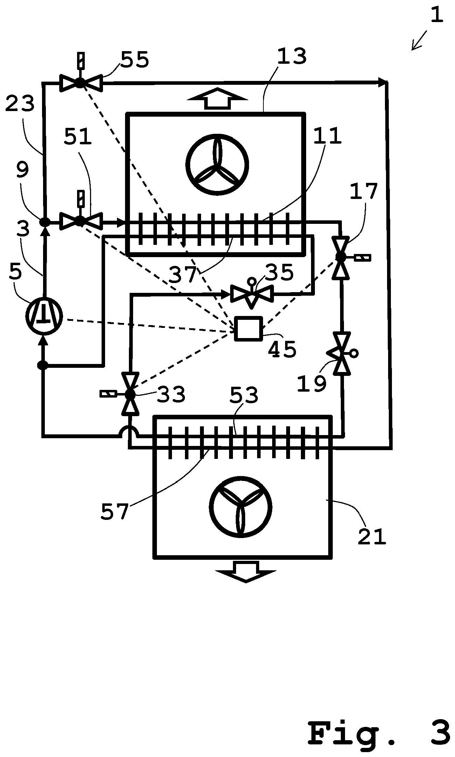

In Figur 3 ist ein weiteres Ausführungsbeispiel einer erfindungsgemäßen Anlage 1 mit Kältemittelkreislauf 3 und Hochdruckregelung gezeigt. Das Ausführungsbeispiel entspricht im Wesentlichen dem Aufbau der in Figur 3 von DE102016110443A1 gezeigten Anlage, jedoch weist die erfindungsgemäße Anlage 1 einen Verdichter 5 auf, der in der Leistung regelbar ist, und eine Steuerung 45, die die Leistung der Anlage 1 sowohl über die Regelung der Verdichterleistung als auch über die Regelung der Kältemittelverlagerung und damit des Hochdrucks des Kältemittels im Hochdruckbereich des Kältemittelkreislaufs 3 steuert. Ferner ist die erfindungsgemäßen Anlage 1 und deren Regelung des Hochdrucks ausgebildet, den Hochdruck im Vergleich zum Druckwert eines nicht reduzierten Hochdrucks um einen regelbaren Druckwert im Bereich von bis zu 50% des Auslegungshochdrucks (PS) oder innerhalb eines Teilbereichs davon zu reduzieren, wobei der Druckwert des Hochdrucks des Kältemittels über dem des Verdampfungsdrucks bei 20 °C liegt. Bei dem Kältemittel Kohlendioxid CO2 beträgt der Verdampfungsdruck bei 20 °C ca. 55 bar. Der Auslegungshochdruck (PS) beträgt bei der Anlage 1 des Ausführungsbeispiels 150 bar. Als Kältemittel dient Co2. Denkbar sind bei Anlagen, die mit CO2 als Kältemittel transkritisch betrieben werden, Auslegungshochdrücke (PS) normalerweise zwischen 120 bar bis 180 bar. Bei Anlagen, die unterkritisch beispielsweise mit R-134a oder R-1234yf als Kältemittel betrieben werden, liegt der Auslegungshochdruck (PS) normalerweise zwischen 25 bar bis 40 bar. Der Verdampfungsdruck bei 20 °C beträgt beim Kältemittel R-134a ca. 5,72 bar und beim Kältemittel R-1234yf ca. 5,92 bar.

Der Kältemittelkreislauf 3 der Anlage 1 teilt sich nach dem regelbaren Verdichter 5 an der Verzweigung 9 in zwei Kältemittelleitungsstränge auf. Der erste Kältemittelleitungsstrang führt durch das als Magnetventil ausgebildeten Ventil 51, durch den Gaskühlerbereich 11 des als Gaskühler betreibbaren Wärmetauschers 13, durch das weitere als Magnetventil ausgebildete Ventil 17 zum als regelbares Expansionsventil ausgebildeten Expansionsorgan 19, das zum Entspannen des Kältemittels dient. Vom Verdichter 5 bis dort reicht also bei diesem Kältemittelleitungsstrang der Hochdruckbereich des Kältemittelkreislaufs 3. Nach dem Expansionsorgan 19 folgt in Kältemittelleitung der Verdampferbereich 53 des weiteren als Verdampfer betreibbaren Wärmetauschers 21. Von dort führt die Kältemittelleitung zum Ansaugeingang des regelbaren Verdichters 5. Somit reicht der Niedrigdruckbereich dieses Kältemittelleitungsstrangs des Kältemittelkreislaufs 3 ab dem Expansionsorgan 19 bis zum Ansaugeingang des Verdichters 5.

Der zweite Kältemittelleitungsstrang führt von der Verzweigung 9 durch das als Magnetventil ausgebildeten Ventil 55, durch den Gaskühlerbereich 57 des auch als Gaskühler betreibbaren weiteren Wärmetauschers 21, durch das weitere als Magnetventil ausgebildete Ventil 33 zum als regelbares Expansionsventil ausgebildete Expansionsorgan 35, das zum Entspannen des Kältemittels dient. Vom Verdichter 5 bis dort reicht also bei diesem zweiten Kältemittelleitungsstrang der Hochdruckbereich des Kältemittelkreislaufs 3. Nach dem Expansionsorgan 35 folgt in Kältemittelleitung der Verdampferbereich 37 des auch als Verdampfer betreibbaren Wärmetauschers 13. Von dort führt die Kältemittelleitung zum Ansaugeingang des regelbaren Verdichters 5. Somit reicht der Niedrigdruckbereich dieses Kältemittelleitungsstrangs des Kältemittelkreislaufs 3 ab dem Expansionsorgan 35 bis zum Ansaugeingang des Verdichters 5. Der als Gaskühler betreibbare Wärmetauscher 13 ist also umschaltbar als Verdampfer betreibbar und der als Verdampfer betreibbare weitere Wärmetauscher 21 ist umschaltbar als Gaskühler betreibbar. Der eine der beiden Wärmetauscher 13, 21 ist ein Außenluftwärmetauscher und der andere ein Kältemittel-Luft-Wärmetauscher, der zum Heizen oder Kühlen von Luft für und/oder in zumindest eine(n)/m Teil eines Fahrzeuginnenraums vorgesehen ist. In diesem Ausführungsbeispiel wird die Leistung des Verdichters 5 über dessen Drehzahl gesteuert. Denkbar sind als Varianten von Verdichter und dessen Regelung auch die weiteren wie zu Figur 1 beschriebenen Regelungsarten der Verdichterleistung. Die Steuerung 45 steuert neben der Drehzahl des Verdichters 5 sowie der Schaltung der beiden Kältemittelstränge des Kältemittelkreislaufs 3 zwischen einen Wärmepumpenbetrieb und einen Klimaanlagenbetrieb auch den Hochdruck des Kältemittels im Hochdruckbereich des Kältemittelkreislaufs 3, indem durch entsprechende Schaltung der Ventile 51, 17, 55, 33 Kältemittel in oder aus eine(n)/m im Kältemittelkreislauf 3 momentan sonst ungenutzten Gaskühlerbereich 11 oder 57 eines der beiden Wärmetauscher 13, 21 verlagert wird. Beispielsweise verlagert sich Kältemittel bei geöffneten Ventilen 51, 17 und 55 sowie geschlossenem Ventil 33 in den im momentan betriebenen Kältemittelkreislauf sonst ungenutzten Gaskühlerbereich 57 des Wärmetauschers 21. Bei später geschlossenem Ventil 55 sowie geöffnetem Ventil 33 strömt Kältemittel aus dem Gaskühlerbereich 57 wieder heraus. Mit Kältemittelverlagerung lässt sich die Masse von Kältemittel im gerade von Kältemittel durchströmten Kältemittelleitungsstrang regeln und so auch der Hochdruck im Hochdruckbereich des durchströmten Kältemittelleitungsstrangs des Kältemittelkreislaufs 3 steuern beziehungsweise im Vergleich zum Druckwert eines nicht reduzierten Hochdrucks um einen regelbaren Druckwert reduzieren. Die Steuerung 45 ist ausgebildet, dass mittels ihr die Anlage 1 bei Wärmepumpenbetrieb gesteuert werden kann, dass, je geringer der Wärmebedarf ist, also insbesondere je höher die Außentemperatur ist, vorrangig die Leistung des Verdichters 5 verringert wird und nachrangig der Hochdruck des Kältemittels im Hochdruckbereich des Kältemittelkreislaufs 3 verringert wird. Die Leistung des Verdichters 5 verhält sich im Wärmepumpenbetrieb der Anlage 1 gegenläufig, vorzugsweise reziprok, zur Höhe der Außentemperatur.

Ferner ist die Steuerung 45 ausgebildet, dass mittels ihr die Anlage 1 bei Klimaanlagenbetrieb derart steuerbar ist, dass, je geringer der Kühlbedarf ist, also insbesondere je geringer die Außentemperatur ist, vorrangig die Leistung des Verdichters 5 verringert wird und nachrangig der Hochdruck des Kältemittels im Hochdruckbereich des Kältemittelkreislaufs 3 verringert wird. Die Leistung des Verdichters 5 verhält sich im Kälteanalagenbetrieb der Anlage 1 gleichläufig, vorzugsweise proportional, zur Höhe der Außentemperatur. Insbesondere die Daten vom aus Gründen der Übersichtlichkeit in Figur 3 nicht gezeigten Außentemperatursensor, vom aus Gründen der Übersichtlichkeit in Figur 3 nicht gezeigten Fahrzeuginnenraumlufttemperatursensor sowie der vorgegebene Sollwert für die Fahrzeuginnenraumlufttemperatur sind für die Ermittlung der Steueranweisungen der Steuerung 45 notwendig.

Das in Figur 3 dargestellte Ausführungsbeispiel einer Anlage 1 ist für ein Elektro- oder Hybridfahrzeug vorgesehen, wie insbesondere für einen Elektroomnibus oder Hybridomnibus. Aber auch eine Ausgestaltung der Anlage 1 für ein Schienenfahrzeug mit elektrischem Antrieb ist denkbar.

Ferner ist eine Kombination der beiden in Figur 1 und Figur 3 gezeigten Ausführungsbeispiele in einer Anlage 1 denkbar, also einer erfindungsgemäßen Anlage 1 mit regelbarer Verdichterleistung, an den Kältemittelkreislauf 3 erfindungsgemäß koppelbaren Thermospeichern 7, 25 sowie einer erfindungsgemäßen Regelung des Hochdrucks im Hochdruckbereich des Kältemittelkreislaufes 3 durch Kältemittelverlagerung.

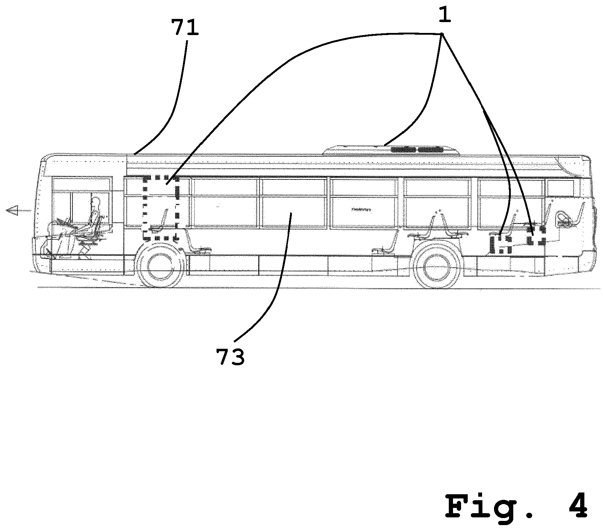

In Figur 4 ist ein Elektro- oder Hybridfahrzeug 71 als Elektro- oder Hybridomnibus mit einem Ausführungsbeispiel einer erfindungsgemäßen Anlage 1 zum Heizen und Kühlen von Luft für und in de(n)/m Fahrgastbereich sowie de(n)/m Fahrersitzbereich des Fahrzeuginnenraums 73 gezeigt.

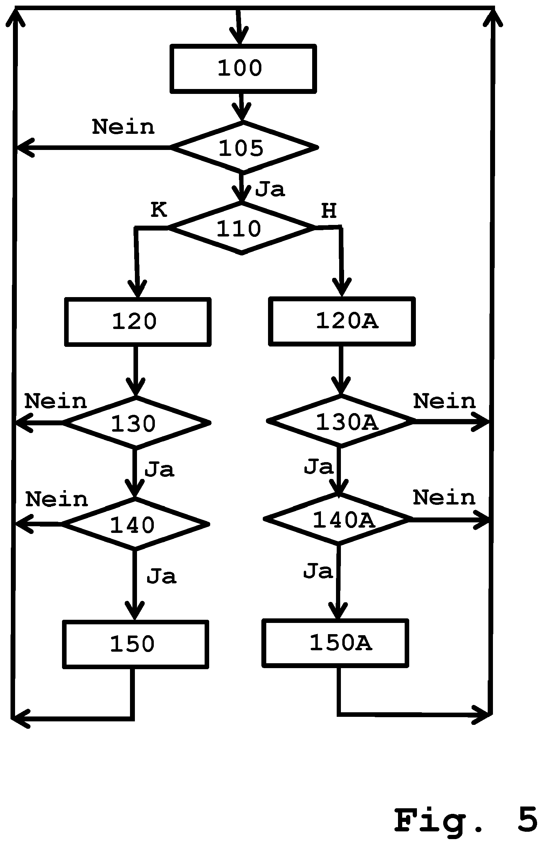

In Figur 5 ist mit einem Flussdiagramm ein Verfahren zum Steuern des in Figur 1 gezeigten Ausführungsbeispiels einer erfindungsgemäßen Anlage für das Heizen oder Kühlen von Luft für und/oder in zumindest eine(n)/m Teil eines Fahrzeuginnenraums eines Elektro- oder Hybridfahrzeugs dargestellt. Im ersten Verfahrensschritt 100 wird der Heiz- oder Kühlbedarf festgestellt. Dazu empfängt die Steuerung für die Anlage von einem Außentemperatursensor des Fahrzeugs den Wert der momentanen Außentemperatur also den der Umgebungstemperatur. Ferner empfängt die Steuerung für die Anlage die Temperatur der Luft im zu heizenden oder zu kühlenden Teil des Fahrzeuginnenraums wie zum Beispiel dem Fahrgastraum. Anhand des der Steuerung vorgegebenen Sollwerts für die Temperatur im zu temperierenden Teil des Fahrzeuginnenraums ermittelt die Steuerung den Heiz- oder Kühlbedarf. Wenn kein Kühl- oder Heizbedarf festgestellt wird, also "Nein" in Schritt 105, beginnt das Verfahren erneut. Ansonsten, also "Ja" in Schritt 105, stellt die Steuerung im folgenden Schritt 110 die Anlage auf Klimaanlagenbetrieb ein, wenn Kühlbedarf besteht also "K", und auf Wärmepumpenbetrieb ein, wenn Heizbedarf besteht also "H". Bei Klimaanlagenbetrieb wird vorrangig der im Niedrigdruckbereich des Kältemittelkreislaufs angeordnete Wärmetauscher als Verdampfer im Kältemittelkreislauf der Anlage zum Kühlen des Kühlmittels im sekundären Kühlkreislauf für das Kühlen von Luft für und/oder in zumindest eine(n)/m Teil des Fahrzeuginnenraums eingesetzt. Der sekundäre Heizkreislauf der Anlage ist dabei entweder ausgeschaltet oder führt Wärme des Kältemittels beispielweise über einen eigenen Außenluftwärmetauscher nur nach außen ab. Im Verfahrensschritt 120 wird die Leistung des Verdichters des Kältemittelkreislaufs der Anlage von der Steuerung geregelt. Die Höhe der Leistung des Verdichters verhält sich dabei gleichläufig zur Höhe der Außentemperatur beziehungsweise mit der Höhe der Differenz die die Außentemperatur über dem Sollwert der Temperatur der Luft im Fahrzeuginnenraum liegt. Also bei sehr hoher Außentemperatur ist die Leistung des Verdichters hoch eingestellt. Bei einer Regelung der Drehzahl des Verdichters läuft dieser dann auf der maximalen Drehzahl von beispielsweise 50 Hz. Bei anderen Arten der Regelung der Leistung des Verdichters wie über Kurzschlussverbindung von Kältemittel zwischen Zylindern des Verdichters mittels regelbaren Ventils und/oder über Absperrung des Saugraums des Verdichters mittels regelbaren Ventils wäre entsprechend bei sehr hoher Außentemperatur der Verdichter auf volle Leistung geregelt. Je niedriger die Außentemperatur ist, also der Kühlbedarf ist, desto niedriger wird im Verfahrensschritt 120 die Leistung des Verdichters, wie beispielsweise dessen Drehzahl, eingestellt. Damit ist die Kühlleistung der Anlage niedriger oder es wird zumindest damit die bei der Anlage wegen niedrigerer Außentemperatur sonst aufgrund höherer Kühleffizienz ansteigende Kühlleistung ausgeglichen. Jedoch lässt sich, je geringer der Kühlbedarf ist, die Leistung der Anlage nur ineffizient und mit steigender Gefahr von Schäden am Verdichter allein mit der Absenkung der Leistung des Verdichters regeln. Es besteht beispielsweise bei der Regelung der Leistung des Verdichters über dessen Drehzahl ein Minimum von beispielsweise 30 Hz der einzustellenden Drehzahl. Auch eine zusätzliche allein verdichterseitige Regelung über die relative Einschaltzeit des Verdichters ist hin zu geringem Kühlbedarf zunehmend ineffizient. Im Schritt 130 stellt die Steuerung anhand des Kühlbedarfs fest, ob zur Kühlung eine nachrangige Kühlung durch gespeicherte Kälte im als Kältespeicher fungierenden Thermospeicher effizient beziehungsweise vorteilhaft ist. Falls "Nein" beginnt das Verfahren von neuem und falls "Ja" stellt die Steuerung im folgenden Schritt 140 durch Empfang von Messdaten des als Kältespeicher fungierenden Thermospeicher fest, ob genügend Kälte dort gespeichert ist beziehungsweise ob noch genügend Wärmespeicherkapazität vorhanden ist. Bei "Nein" im Schritt 140 beginnt das Verfahren neu, wobei dann bei erneutem Durchlauf auch ein Speichern von Kälte im als Kältespeicher fungierenden Thermospeicher berücksichtigt wird. Bei "Ja" im Schritt 140 wird geregelt von der Steuerung im folgenden Schritt 150 je geringer der Kühlbedarf ist zunehmend das zur Regelung der Verdichterleistung nachrangige Kühlen durch geregelte Freigabe von gespeicherter Kälte im als Kältespeicher eingesetzten Thermospeicher der Anlage von der Steuerung eingesetzt. Bei geringem Kühlbedarf erfolgt diese Freigabe von im als Kältespeicher fungierenden Thermospeicher gespeicherter Kälte sogar nicht mehr kumulativ mit dem Kühlen über den Kältemittelkreislauf bei eingeschaltetem geregelten Verdichter, sondern im Wechsel damit, wobei die relative Einschaltzeit des geregelten Verdichters je geringer der Kühlbedarf ist immer geringer wird, also die Zeiten, bei denen allein das Kühlen durch freigegebene Kälte aus dem als Kältespeicher fungierenden Thermospeicher erfolgt, länger werden. Mit der von der Steuerung erfolgenden Regelung der Leistung der Pumpe für die Kühlflüssigkeit im sekundären Kühlkreislauf wird indirekt dabei auch die Freigabe im als Kältespeicher fungierenden Thermospeicher der Anlage geregelt. Nach einem Zeitintervall von beispielsweise 1 Sekunde fängt das Verfahren von neuem an durchzulaufen.

Stellt die Steuerung im Schritt 110 die Anlage bei Heizbedarf "H" auf Wärmepumpenbetrieb ein, wird vorrangig der zum Wärmeaustausch vom Hochdruckbereich des Kältemittelkreislaufs mit dem sekundären Heizkreislauf vorgesehene Wärmetauscher zum Heizen von im sekundären Heizkreislauf für das Heizen von Luft für und/oder in zumindest eine(n)/m Teil des Fahrzeuginnenraums eingesetzt. Der sekundäre Kühlkreislauf der Anlage ist dabei entweder ausgeschaltet oder nimmt Wärme des Kältemittels allein zum Kühlen beispielsweise der Batterie für den Antrieb des Fahrzeugs und/oder zum Abführen nach außen auf. Im Verfahrensschritt 120A wird die Leistung des Verdichters des Kältemittelkreislaufs der Anlage von der Steuerung geregelt. Die Höhe der Leistung des Verdichters verhält sich dabei gegenläufig, vorzugsweise reziprok, zur Höhe der Außentemperatur beziehungsweise gleichläufig zur Höhe der Differenz, die die Außentemperatur unter dem Sollwert der Temperatur der Luft im Fahrzeuginnenraum liegt. Also ist bei sehr geringer Außentemperatur die Leistung des Verdichters hoch eingestellt. Bei einer Regelung der Drehzahl des Verdichters läuft dieser dann auf der maximalen Drehzahl von beispielsweise 50 Hz. Bei anderen Arten der Regelung der Leistung des Verdichters wie über Kurzschlussverbindung von Kältemittel zwischen Zylindern des Verdichters mittels regelbaren Ventils und/oder über Absperrung des Saugraums des Verdichters mittels regelbaren Ventils wäre entsprechend bei sehr niedriger Außentemperatur der Verdichter auf volle Leistung geregelt. Je höher die Außentemperatur ist, also je geringer der Heizbedarf ist, desto niedriger wird im Verfahrensschritt 120A die Leistung des Verdichters, wie beispielsweise dessen Drehzahl, eingestellt. Damit ist die Heizleistung der Anlage niedriger oder es wird zumindest damit die bei der Anlage wegen höherer Außentemperatur sonst aufgrund höherer Heizeffizienz ansteigende Heizleistung ausgeglichen. Jedoch lässt sich, je geringer der Heizbedarf ist, die Leistung der Anlage im Wärmepumpenbetrieb nur ineffizient und mit steigender Gefahr von Schäden am Verdichter allein mit der Absenkung der Leistung des Verdichters regeln. Es besteht beispielsweise bei der Regelung der Leistung des Verdichters über dessen Drehzahl ein Minimum von beispielsweise 30 Hz der einzustellenden Drehzahl. Auch eine zusätzliche allein verdichterseitige Regelung über die relative Einschaltzeit des Verdichters ist hin zu geringem Heizbedarf zunehmend ineffizient. Im Schritt 130A stellt die Steuerung anhand des ermittelten Heizbedarfs fest, ob zum Heizen ein nachrangiges Heizen durch gespeicherte Wärme im als Wärmespeicher fungierenden und an den Hochdruckbereich des Kältemittelkreislaufs der Anlage thermisch gekoppelten Thermospeicher mit Phasen-Wechsel-Material als Wärmespeicher effizient beziehungsweise vorteilhaft ist. Falls "Nein" beginnt das Verfahren nach einem bestimmten Zeitintervall von neuem und falls "Ja" stellt die Steuerung im folgenden Schritt 140A durch Empfang von Messdaten des als Wärmespeicher fungierenden Thermospeichers fest, ob genügend Wärme, wie insbesondere latente Wärme, dort gespeichert ist. Bei "Nein" im Schritt 140A beginnt das Verfahren nach einem vorbestimmten Zeitintervall neu, wobei dann bei erneutem Durchlauf auch ein Speichern von Wärme im als Wärmespeicher fungierenden Thermospeicher berücksichtigt wird. Bei "Ja" im Schritt 140A wird geregelt von der Steuerung im Schritt 150A je geringer der Heizbedarf ist zunehmend das zur Regelung der Verdichterleistung nachrangige Heizen durch geregelte Freigabe von gespeicherter Wärme aus dem als Wärmespeicher eingesetzten Thermospeicher der Anlage von der Steuerung eingesetzt. Bei geringem Heizbedarf erfolgt diese Freigabe von im als Wärmespeicher fungierenden Thermospeicher gespeicherter Wärme sogar nicht mehr kumulativ mit dem Heizen über den Kältemittelkreislauf durch einen als Kondensator oder Gaskühler betriebenen Wärmetauscher bei eingeschaltetem geregelten Verdichter, sondern im Wechsel damit, wobei die relative Einschaltzeit des geregelten Verdichters, je geringer der Heizbedarf ist, immer geringer wird, also die Zeiten, bei dem das Heizen allein durch freigegebene Wärme aus dem als Wärmespeicher fungierende Thermospeicher erfolgt, länger werden. Mit der von der Steuerung erfolgenden Regelung der Leistung der Pumpe für das Heizmittel im sekundären Heizkreislauf wird indirekt dabei auch die Freigabe im als Wärmespeicher fungierenden Thermospeicher der Anlage geregelt. Nach einem Zeitintervall von beispielsweise 1 Sekunde fängt das Verfahren von neuem an durchzulaufen.

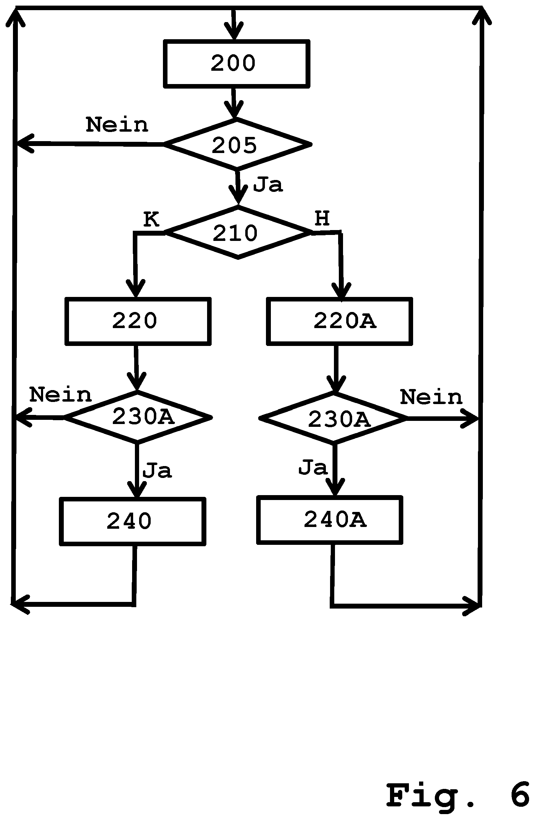

In Figur 6 ist in einem Flussdiagramm ein Verfahren zum Steuern des in Figur 3 gezeigten Ausführungsbeispiels einer erfindungsgemäßen Anlage für das Heizen oder Kühlen von Luft für und/oder in zumindest eine(n)/m Teil eines Fahrzeuginnenraums eines Elektro- oder Hybridfahrzeugs dargestellt. Die Verfahrensschritte 200, 205, 210, 220 und 220A entsprechen im Wesentlichen den zu Figur 5 beschriebenen Verfahrensschritten 100, 105, 110, 120 und 120A, wobei in diesem Ausführungsbeispiel jedoch kein sekundärer Heizkreislauf und kein sekundärer Kühlkreislauf vorhanden sind, sondern der für die Temperierung von Luft für und/oder in de(n)/m Fahrzeuginnraum eingesetzte erste Wärmetauscher ein Kältemittel-Luft-Wärmetauscher ist, der direkt die Luft kühlt oder heizt, je nach dem ob er im Verfahrensschritt 210 als Verdampfer oder als Gaskühler eingestellt wird. Der zweite Wärmetauscher des Kältemittelkreislaufs ist ein Außenluftwärmetauscher, der jeweils entgegengesetzt zum ersten Wärmetauscher als Gaskühler oder Verdampfer im Verfahrensschritt 210 eingestellt wird.

Bei Einstellung der Anlage als Klimaanlage stellt die Steuerung im Schritt 230 anhand des Kühlbedarfs fest, ob zum Kühlen eine zur Regelung der Verdichterleistung nachrangige Regelung der Kühlung durch Verringerung des Hochdrucks des Kältemittels im Hochdruckbereich des Kältemittelkreislaufs effizient beziehungsweise vorteilhaft ist. Falls "Nein" beginnt das Verfahren nach einem vorbestimmten Zeitintervall von neuem und falls "Ja" regelt die Steuerung im Schritt 240, je geringer der Kühlbedarf ist, die Anlagen derart, dass zunehmend das zur Regelung der Verdichterleistung nachrangige Steuern des Kühlens durch geregeltes Absenken des Hochdrucks des Kältemittels im Hochdruckbereich des Kältemittelkreislaufs eingesetzt wird. Hin zu immer geringerem Kühlbedarf erfolgt die Herabsenkung des Hochdrucks weiter bis hinunter zum minimal bei diesem Ausführungsbeispiel der Anlage mit dem Kältemittel einstellbaren Hochdruck, also dass der Hochdruck des Kältemittels im Vergleich zum Druckwert eines nicht reduzierten Hochdrucks bis zu 50% des Auslegungshochdrucks (PS) reduziert wird aber dennoch der Druckwert des Hochdrucks des Kältemittels über dem des Verdampfungsdrucks des Kältemittels bei 20° C liegt.

Die Absenkung des Hochdrucks erfolgt durch die Regelung der Verlagerung von Kältemittel in den beim Kühlen gerade sonst ungenutzten Gaskühlerbereich des für das Kühlen der Luft für den Fahrzeuginnenraum eingesetzten ersten Wärmetauschers der Anlage. Dazu steuert die Steuerung das eine Ventil vor und das weitere Ventil nach dem Gaskühlerbereich des ersten Wärmetauschers entsprechend. Nach einem Zeitintervall von beispielsweise 1 Sekunde fängt das Verfahren von neuem an durchzulaufen.

Bei Einstellung der Anlage als Wärmepumpe stellt die Steuerung im Schritt 230A anhand des Heizbedarfs fest, ob zum Heizen eine zur Regelung der Verdichterleistung nachrangige Regelung des Heizens durch Verringerung des Hochdrucks des Kältemittels im Hochdruckbereich des Kältemittelkreislaufs effizient beziehungsweise vorteilhaft ist. Falls "Nein" beginnt das Verfahren von neuem und falls "Ja" regelt die Steuerung im Schritt 240A, je geringer der Heizbedarf ist, die Anlagen derart, dass zunehmend das zur Regelung der Verdichterleistung nachrangige Steuern des Heizens durch geregeltes Absenken des Hochdrucks des Kältemittels im Hochdruckbereich des Kältemittelkreislaufs eingesetzt wird. Hin zu immer geringerem Heizbedarf erfolgt die Herabsenkung des Hochdrucks weiter bis hinunter zum minimal bei diesem Ausführungsbeispiel der Anlage mit dem Kältemittel einstellbaren Hochdruck, also dass der Hochdruck des Kältemittels im Vergleich zum Druckwert eines nicht reduzierten Hochdrucks bis zu 50% des Auslegungshochdrucks (PS) reduziert wird aber dennoch der Druckwert des Hochdrucks des Kältemittels über dem des Verdampfungsdrucks des Kältemittels bei 20° C liegt.

Die Absenkung des Hochdrucks erfolgt durch die Regelung der Verlagerung von Kältemittel in den beim Heizen gerade sonst ungenutzten Gaskühlerbereich des als Außenluftwärmetauscher eingesetzten zweiten Wärmetauschers der Anlage. Dazu steuert die Steuerung das eine Ventil vor und das weitere Ventil nach dem Gaskühlerbereich des zweiten Wärmetauschers entsprechend. Nach einem Zeitintervall von beispielsweise 1 Sekunde fängt das Verfahren von neuem an durchzulaufen.

Denkbar ist auch ein Verfahren zum entsprechenden Steuern einer erfindungsgemäßen Anlage, die eine Kombination aus beiden in Figur 1 und Figur 3 gezeigten Ausführungsbeispiele ist, also mit vorrangig regelbarer Verdichterleistung sowie an den Kältemittelkeislauf erfindungsgemäß koppelbaren Thermospeichern und einer erfindungsgemäßen Regelung des Hochdrucks im Hochdruckbereich des Kältemittelkreislaufes durch Kältemittelverlagerung.

## Patentansprüche

1. Anlage (1) für ein Elektro- oder Hybridfahrzeug (71) mit einem als Wärmepumpe zum Heizen von Luft für und/oder in zumindest eine(n)/m Teil eines Fahrzeuginnenraums (73) betreibbaren und wenigstens einen Verdichter (5), wenigstens einen als Kondensator oder Gaskühler betreibbaren Wärmetauscher (13, 8), wenigstens ein Expansionsorgan (19, 35) sowie wenigstens einen weiteren als Verdampfer betreibbaren Wärmetauscher (21) umfassenden Kältemittelkreislauf (3), wobei
die Anlage (1) einen an den Hochdruckbereich des als Wärmepumpe betreibbaren Kältemittelkreislaufs (3) thermisch gekoppelten oder thermisch koppelbaren Thermospeicher (7) mit einem Phasen-Wechsel-Material als Wärmespeicher umfasst, **dadurch gekennzeichnet,**
- **dass** die Verdichterleistung regelbar ist und
- **dass** die Anlage (1) eine Steuerung (45) umfasst, die ausgebildet ist, dass mittels ihr die Anlage (1) bei Wärmepumpenbetrieb derart steuerbar ist, dass, je geringer der Wärmebedarf ist, vorrangig die Leistung des wenigstens einen Verdichters (5) verringert wird und nachrangig im Thermospeicher (7) gespeicherte Wärme zur Deckung des Wärmebedarfs für das Heizen von Luft für und/oder in zumindest eine(n)/m Teil eines Fahrzeuginnenraums (73) geregelt freigegeben wird.

2. Anlage (1) nach Anspruch 1 **dadurch gekennzeichnet, dass** sie derart ausgebildet ist, dass die Verdichterleistung über die Drehzahl beziehungsweise Frequenz des wenigstens einen Verdichters (5) und/oder über Kurzschlussverbindung von Kältemittel zwischen Zylindern des wenigstens einen Verdichters (5) mittels regelbaren Ventils und/oder über Absperrung des Saugraums des wenigstens einen Verdichters (5) mittels regelbaren Ventils regelbar ist.

3. Anlage (1) nach Anspruch 1 oder 2 **dadurch gekennzeichnet, dass** sie umschaltbar auch als Klimaanlage zum Kühlen von Luft für und/oder in zumindest eine(n)/m Teil eines Fahrzeuginnenraums (73) betreibbar ausgebildet ist, wobei zumindest der wenigstens eine für den Wärmepumpenbetrieb einsetzbare Verdichter (5) auch als wenigstens ein Verdichter (5) im Kältemittelkreislauf (3) des Klimaanlagenbetriebs angeordnet ist.

4. Anlage (1) nach einem der Ansprüche 1 bis 3 **dadurch gekennzeichnet, dass** der als Kondensator oder Gaskühler betreibbare Wärmetauscher (8, 13) umschaltbar als Verdampfer betreibbar ist und der als Verdampfer betreibbare weitere Wärmetauscher (21) umschaltbar als Kondensator oder Gaskühler betreibbar ist.

5. Anlage (1) nach einem der Ansprüche 1 bis 4 **dadurch gekennzeichnet, dass** sie einen an den Niedrigdruckbereich des als Klimaanlage betreibbaren Kältemittelkreislaufs (3) thermisch gekoppelten oder thermisch koppelbaren weiteren Thermospeicher (25) mit einem Phasen-Wechsel-Material als Kältespeicher umfasst.

6. Anlage (1) nach Anspruch 5 **dadurch gekennzeichnet, dass** die Steuerung (45) ausgebildet ist, dass mittels ihr die Anlage (1) bei Klimaanlagenbetrieb derart steuerbar ist, dass, je geringer der Kühlbedarf ist, vorrangig die Leistung des wenigstens einen Verdichters (5) verringert wird und nachrangig im weiteren Thermospeicher (25) gespeicherte Kälte zur Deckung des Kühlbedarfs für das Kühlen von Luft für und/oder in zumindest eine(n)/m Teil eines Fahrzeuginnenraums (73) geregelt freigegeben wird.

7. Anlage (1) nach einem der Ansprüche 1 bis 6 **dadurch gekennzeichnet, dass** sie eine Regelung des Hochdrucks des Kältemittels im Hochdruckbereich des Kältemittelkreislaufs (3) umfasst, die ausgebildet ist, den Hochdruck im Vergleich zum Druckwert eines nicht reduzierten Hochdrucks um einen regelbaren Druckwert im Bereich von bis zu 50% des Auslegungshochdrucks (PS) oder innerhalb eines Teilbereichs davon zu reduzieren, wobei der Druckwert des Hochdrucks des Kältemittels über dem des Verdampfungsdrucks bei 20° C liegt.

8. Anlage (1) nach Anspruch 7 **dadurch gekennzeichnet, dass** die Steuerung (45) ausgebildet ist, dass mittels ihr der Hochdruck des Kältemittels im Hochdruckbereich des Kältemittelkreislaufs (3) durch Kältemittelverlagerung in oder aus ein/em Speichervolumen für Kältemittel und/oder in oder aus eine(n)/m momentan sonst ungenutzten Bereich des Kältemittelkreislaufs (3) regelbar ist.

9. Anlage (1) nach Anspruch 8 **dadurch gekennzeichnet, dass** sie derart ausgebildet ist, dass die Kältemittelverlagerung in oder aus eine(n)/m im Kältemittelkreislauf (3) momentan sonst ungenutzten Kondensator- oder Gaskühlerbereich (11, 57) eines der Wärmetauscher (13, 21) regelbar ist.

10. Anlage (1) nach einem der Ansprüche 7 bis 9 **dadurch gekennzeichnet, dass** die Steuerung (45) ausgebildet ist, dass mittels ihr die Anlage (1) bei Wärmepumpenbetrieb derart steuerbar ist, dass, je geringer der Wärmebedarf ist, vorrangig die Leistung des Verdichters (5) verringert wird und nachrangig der Hochdruck des Kältemittels im Hochdruckbereich des Kältemittelkreislaufs (3) verringert wird.

11. Anlage (1) nach einem der Ansprüche 7 bis 10 **dadurch gekennzeichnet, dass** die Steuerung (45) ausgebildet ist, dass mittels ihr die Anlage (1) bei Klimaanlagenbetrieb derart steuerbar ist, dass, je geringer der Kühlbedarf ist, vorrangig die Leistung des Verdichters (5) verringert wird und nachrangig der Hochdruck des Kältemittels im Hochdruckbereich des Kältemittelkreislaufs (3) verringert wird.

12. Elektro- oder Hybridfahrzeug (71) **dadurch gekennzeichnet, dass** es eine Anlage (1) nach einem der Ansprüche 1 bis 11 umfasst.

13. Verfahren zum Steuern einer Anlage (1) nach einem der Ansprüche 1 bis 11 für das Heizen oder Kühlen von Luft für und/oder in zumindest eine(n)/m Teil eines Fahrzeuginnenraums (73) eines Elektro- oder Hybridfahrzeugs (71), **dadurch gekennzeichnet,**
- **dass** je nach Heiz- oder Kühlbedarf die Verdichterleistung geregelt wird (120, 120A, 220, 220A), und
- **dass** kumulativ oder im Wechsel zur Regelung der Verdichterleistung je nach Heiz- oder Kühlbedarf gespeicherte Wärme oder gespeicherte Kälte in wenigstens einem Thermospeicher (7, 25) für das Heizen oder das Kühlen geregelt freigegeben wird (150, 150A) und
- **dass** vorrangig die Verdichterleistung geregelt (120, 120A) und nachrangig dazu je nach Heiz- oder Kühlbedarf gespeicherte Wärme oder gespeicherte Kälte im wenigstens einen Thermospeicher (7, 25) für das Heizen oder das Kühlen geregelt freigegeben wird (150, 150A).

14. Verfahren nach Anspruch 13 zum Steuern einer Anlage nach einem der Ansprüche 7 bis 11, **dadurch gekennzeichnet,**
- **dass** kumulativ oder im Wechsel zur Regelung der Verdichterleistung je nach Heiz- oder Kühlbedarf der Hochdruck des Kältemittels im Hochdruckbereich des Kältemittelkreislaufs (3) geregelt wird (240, 240A), wobei der Hochdruck im Vergleich zum Druckwert eines nicht reduzierten Hochdrucks um einen regelbaren Druckwert im Bereich von bis zu 50% des Auslegungshochdrucks (PS) oder innerhalb eines Teilbereichs davon reduziert wird und der Druckwert des Hochdrucks des Kältemittels über dem des Verdampfungsdrucks bei 20° C liegt und
- **dass** vorrangig die Verdichterleistung geregelt (220, 220A) und nachrangig zur Regelung der Verdichterleistung je nach Heiz- oder Kühlbedarf der Hochdruck des Kältemittels im Hochdruckbereich des Kältemittelkreislaufs (3) geregelt wird (240, 240A).

15. Verfahren nach Anspruch 13 oder 14, **dadurch gekennzeichnet, dass** bei Wärmepumpenbetrieb der Anlage (1) die Höhe der Leistung sowie die Länge der relativen Einschaltzeit des wenigstens einen Verdichters (5) gegenläufig, vorzugsweise reziprok, zur Höhe der Außentemperatur geregelt werden (120A, 220A).

16. Verfahren nach einem der Ansprüche 13 bis 15, **dadurch gekennzeichnet, dass** bei Klimaanlagenbetrieb der Anlage (1) die Höhe der Leistung sowie die Länge der relativen Einschaltzeit des wenigstens einen Verdichters (5) gleichläufig, vorzugsweise proportional, zur Höhe der Außentemperatur geregelt werden (120, 220).

## Claims

1. System (1) for an electric or hybrid vehicle (71), having a refrigerant circuit (3) which can be operated as a heat pump for heating air for and/or in at least one part of a vehicle interior (73) and which comprises at least one compressor (5), at least one heat exchanger (13, 8) which can be operated as a condenser or gas cooler, at least one expansion element (19, 35) and at least one further heat exchanger (21) which can be operated as an evaporator, wherein
the system (1) comprises a thermal accumulator (7) with a phase-change material as heat accumulator, which thermal accumulator is or can be coupled thermally to the high-pressure region of the refrigerant circuit (3) operable as a heat pump, **characterized**
- **in that** the compressor power can be regulated, and
- **in that** the system (1) comprises a controller (45) which is configured such that, by means of said controller, the system (1), in heat-pump mode, can be controlled in such a way that, for a relatively low heating requirement, reducing the power of the at least one compressor (5) has relatively high priority and releasing in a regulated manner heat stored in the thermal accumulator (7) for covering the heating requirement for heating of air for and/or in at least one part of a vehicle interior (73) has relatively low priority.

2. System (1) according to Claim 1, **characterized in that** said system is configured in such a way that the compressor power can be regulated via the rotational speed or frequency of the at least one compressor (5) and/or via short-circuit connection of refrigerant between cylinders of the at least one compressor (5) by means of a regulable valve and/or via blocking of the suction chamber of the at least one compressor (5) by means of a regulable valve.

3. System (1) according to Claim 1 or 2, **characterized in that** said system is configured such that it can be switched over to be operable also as an air-conditioning system for cooling air for and/or in at least one part of a vehicle interior (73), wherein at least the at least one compressor (5) which can be used for the heat-pump mode is also arranged as at least one compressor (5) in the refrigerant circuit (3) of the air-conditioning mode.

4. System (1) according to one of Claims 1 to 3, **characterized in that** the heat exchanger (8, 13) operable as a condenser or gas cooler can be switched over to be operable as an evaporator, and the further heat exchanger (21) operable as an evaporator can be switched over to be operable as a condenser or gas cooler.

5. System (1) according to one of Claims 1 to 4, **characterized in that** said system comprises a further thermal accumulator (25) with a phase-change material as cold accumulator, which further thermal accumulator is or can be coupled thermally to the low-pressure region of the refrigerant circuit (3) operable as an air-conditioning system.

6. System (1) according to Claim 5, **characterized in that** the controller (45) is configured such that, by means of said controller, the system (1), in air-conditioning-system mode, can be controlled in such a way that, for a relatively low cooling requirement, reducing the power of the at least one compressor (5) has relatively high priority and releasing in a regulated manner cold stored in the further thermal accumulator (25) for covering the cooling requirement for cooling of air for and/or in at least one part of a vehicle interior (73) has relatively low priority.

7. System (1) according to one of Claims 1 to 6, **characterized in that** said system comprises a regulation means for the high pressure of the refrigerant in the high-pressure region of the refrigerant circuit (3), which regulation means is configured such that, in comparison with the pressure value of a high pressure that is not reduced, it reduces the high pressure by a regulable pressure value in the range of up to 50% of the design high pressure (PS) or within a sub-range thereof, wherein the pressure value of the high pressure of the refrigerant is above that of the evaporation pressure at 20°C.

8. System (1) according to Claim 7, **characterized in that** the controller (45) is configured such that, by means of said controller, the high pressure of the refrigerant in the high-pressure region of the refrigerant circuit (3) can be regulated by displacement of refrigerant into or out of an accumulator volume for refrigerant and/or into or out of a region of the refrigerant circuit (3) that is presently otherwise unused.

9. System (1) according to Claim 8, **characterized in that** said system is configured in such a way that the displacement of refrigerant into or out of a condenser region or gas-cooler region (11, 57) of one of the heat exchangers (13, 21) that is presently otherwise unused in the refrigerant circuit (3) can be regulated.

10. System (1) according to one of Claims 7 to 9, **characterized in that** the controller (45) is configured such that, by means of said controller, the system (1), in heat-pump mode, can be controlled in such a way that, for a relatively low heating requirement, reducing the power of the compressor (5) has relatively high priority and reducing the high pressure of the refrigerant in the high-pressure region of the refrigerant circuit (3) has relatively low priority.

11. System (1) according to one of Claims 7 to 10, **characterized in that** the controller (45) is configured such that, by means of said controller, the system (1), in air-conditioning-system mode, can be controlled in such a way that, for a relatively low cooling requirement, reducing the power of the compressor (5) has relatively high priority and reducing the high pressure of the refrigerant in the high-pressure region of the refrigerant circuit (3) has relatively low priority.

12. Electric or hybrid vehicle (71), **characterized in that** said electric or hybrid vehicle comprises a system (1) according to one of Claims 1 to 11.

13. Method for controlling a system (1) according to one of Claims 1 to 11 for heating or cooling of air for and/or in at least one part of a vehicle interior (73) of an electric or hybrid vehicle (71), **characterized**
- **in that** the compressor power is regulated according to heating or cooling requirement (120, 120A, 220, 220A), and
- **in that**, cumulatively or alternately, for regulating the compressor power, stored heat or stored cold in at least one thermal accumulator (7, 25) is released in a regulated manner for heating or cooling according to heating or cooling requirement (150, 150A), and
- **in that** regulating the compressor power (120, 120A) has relatively high priority and, with respect thereto, releasing in a regulated manner stored heat or stored cold in the at least one thermal accumulator (7, 25) for heating or cooling according to heating or cooling requirement (150, 150A) has relatively low priority.

14. Method according to Claim 13 for controlling a system according to one of Claims 7 to 11, **characterized**
- **in that**, cumulatively or alternately, for regulating the compressor power, the high pressure of the refrigerant in the high-pressure region of the refrigerant circuit (3) is regulated according to heating or cooling requirement (240, 240A), wherein, in comparison with the pressure value of a high pressure that is not reduced, the high pressure is reduced by a regulable pressure value in the range of up to 50% of the design high pressure (PS) or within a sub-range thereof and the pressure value of the high pressure of the refrigerant is above that of the evaporation pressure at 20°C, and
- **in that** regulating the compressor power (220, 220A) has relatively high priority and, with respect to the regulation of the compressor power, regulating the high pressure of the refrigerant in the high-pressure region of the refrigerant circuit (3) according to heating or cooling requirement (240, 240A) has relatively low priority.

15. Method according to Claim 13 or 14, **characterized in that**, in the heat-pump mode of the system (1), the magnitude of the power and the length of the relative switch-on time of the at least one compressor (5) are regulated in an opposite manner, preferably in a reciprocal manner, in relation to the magnitude of the outside temperature (120A, 220A).

16. Method according to one of Claims 13 to 15, **characterized in that**, in the air-conditioning-system mode of the system (1), the magnitude of the power and the length of the relative switch-on time of the at least one compressor (5) are regulated in a like manner, preferably in a proportional manner, in relation to the magnitude of the outside temperature (120, 220).

## Revendications

1. Installation (1) destinée à un véhicule électrique ou hybride (71), comprenant au moins un compresseur (5) pouvant fonctionner en tant que pompe à chaleur pour chauffer l'air pour et/ou dans au moins une partie d'un habitacle de véhicule (73), au moins un échangeur thermique (13, 8) pouvant fonctionner en tant que condenseur ou refroidisseur de gaz, au moins un organe d'expansion (19, 35), ainsi qu'au moins un autre circuit d'agent réfrigérant (3) pouvant fonctionner en tant qu'évaporateur et comprenant des échangeurs thermiques (21), dans laquelle
l'installation (1) comprend un accumulateur thermique (7) couplé thermiquement ou pouvant être couplé thermiquement à la zone haute pression du circuit d'agent réfrigérant (3) pouvant fonctionner en tant que pompe à chaleur, et doté d'un matériau à changement de phase comme accumulateur thermique,
**caractérisée en ce que**
- la puissance de compresseur est réglable, et
- l'installation (1) comprend un dispositif de commande (45) qui est réalisé de façon à pouvoir commander l'installation (1) dans le mode pompe à chaleur de telle sorte que plus la demande de chaleur est faible, plus dans un premier temps la puissance du au moins un compresseur (5) est réduite, et dans un deuxième temps, la chaleur accumulée dans l'accumulateur thermique (7) est libérée de manière régulée pour satisfaire la demande de chaleur afin de chauffer l'air pour et/ou dans au moins une partie d'un habitacle de véhicule (73).

2. Installation (1) selon la revendication 1, **caractérisée en ce qu'**elle est réalisée de telle sorte que la puissance de compresseur est réglable par l'intermédiaire de la vitesse de rotation ou de la fréquence du au moins un compresseur (5) et/ou par l'intermédiaire d'un raccordement en dérivation de l'agent réfrigérant entre les cylindres du au moins un compresseur (5) au moyen d'une vanne réglable et/ou par un sectionnement de l'espace d'aspiration du au moins un compresseur (5) au moyen d'une vanne réglable.

3. Installation (1) selon la revendication 1 ou 2, **caractérisée en ce qu'**elle est réalisée pour pouvoir fonctionner par commutation également en tant que climatiseur pour refroidir l'air pour et/ou dans au moins une partie d'un habitacle de véhicule (73), dans laquelle ledit au moins ledit au moins un compresseur (5) pouvant être mis en œuvre pour le mode pompe à chaleur est disposé également comme au moins un compresseur (5) dans le circuit d'agent réfrigérant (3) du mode climatiseur.

4. Installation (1) selon l'une quelconque des revendications 1 à 3, **caractérisée en ce que** l'échangeur thermique (8, 13) pouvant fonctionner en tant que condenseur ou refroidisseur de gaz peut fonctionner par commutation en tant qu'évaporateur, et l'autre échangeur thermique (21) pouvant fonctionner en tant qu'évaporateur peut fonctionner par commutation en tant que condenseur ou refroidisseur de gaz.

5. Installation (1) selon l'une quelconque des revendications 1 à 4, **caractérisée en ce qu'**elle comprend un autre accumulateur thermique (25) couplé thermiquement ou pouvant être couplé thermiquement à la zone basse pression du circuit d'agent réfrigérant (3) pouvant fonctionner en tant que climatiseur, et comprenant un matériau à changement de phase comme accumulateur de froid.

6. Installation (1) selon la revendication 5, **caractérisée en ce que** le dispositif de commande (45) est réalisé de façon à pouvoir commander l'installation (1) en mode climatiseur de telle sorte que plus la demande de froid est faible, plus dans un premier temps la puissance du au moins un compresseur (5) est réduite, et dans un deuxième temps, le froid accumulé dans l'autre accumulateur thermique (25) est libéré de manière régulée pour satisfaire la demande de froid afin de refroidir l'air pour et/ou dans au moins une partie d'un habitacle de véhicule (73).

7. Installation (1) selon l'une quelconque des revendications 1 à 6, **caractérisée en ce qu'**elle comprend un dispositif de régulation de la haute pression de l'agent réfrigérant dans la zone haute pression du circuit d'agent réfrigérant (3) qui est réalisé pour réduire la haute pression en comparaison avec la valeur de pression d'une haute pression non réduite d'une valeur de pression réglable dans la plage allant jusqu'à 50 % de la haute pression théorique (PS) ou à l'intérieur d'une plage partielle de celle-ci, la valeur de pression de la haute pression de l'agent réfrigérant étant située au-dessus de la pression d'évaporation à 20 °C.

8. Installation (1) selon la revendication 7, **caractérisée en ce que** le dispositif de commande (45) est réalisé de façon à pouvoir régler la haute pression de l'agent réfrigérant dans la zone haute pression du circuit d'agent réfrigérant (3) en déplaçant l'agent réfrigérant dans un ou hors d'un volume de stockage pour agent réfrigérant et/ou dans une ou hors d'une zone actuellement non utilisée par ailleurs du circuit d'agent réfrigérant (3).

9. Installation (1) selon la revendication 8, **caractérisée en ce qu'**elle est réalisée de telle sorte que le déplacement de l'agent réfrigérant (3) dans une ou hors d'une zone de condenseur ou de refroidisseur de gaz (11, 57) actuellement non utilisée par ailleurs d'un des échangeurs thermiques (13, 21) est réglable.

10. Installation (1) selon l'une quelconque des revendications 7 à 9, **caractérisée en ce que** le dispositif de commande (45) est réalisé de façon à pouvoir commander l'installation (1) en mode pompe à chaleur de telle sorte que plus la demande de chaleur est faible, plus dans un premier temps la puissance du compresseur (5) est réduite, et dans un deuxième temps la haute pression de l'agent réfrigérant dans la zone haute pression du circuit d'agent réfrigérant (3) est réduite.

11. Installation (1) selon l'une quelconque des revendications 7 à 10, **caractérisée en ce que** le dispositif de commande (45) est réalisé de façon à pouvoir commander l'installation (1) en mode climatiseur de telle sorte que plus la demande de froid est faible, plus dans un premier temps la puissance du compresseur (5) est réduite, et dans un deuxième temps la haute pression de l'agent réfrigérant dans la zone haute pression du circuit d'agent réfrigérant (3) est réduite.

12. Véhicule électrique ou hybride (71), **caractérisé en ce qu'**il comprend une installation (1) selon l'une quelconque des revendications 1 à 11.

13. Procédé permettant de commander une installation (1) selon l'une quelconque des revendications 1 à 11, pour chauffer ou refroidir l'air pour et/ou dans au moins une partie d'un habitacle de véhicule (73) d'un véhicule électrique ou hybride (71), **caractérisé en ce que**
- la puissance de compresseur est régulée (120, 120A, 220, 220A) en fonction de la demande de chauffage ou de refroidissement, et
- de manière cumulative ou en alternance avec la régulation de la puissance de compresseur, en fonction de la demande de chauffage ou de refroidissement, de la chaleur accumulée ou du froid accumulé dans au moins un accumulateur thermique (7, 25) est libéré(e) (150, 150A) de manière régulée pour le chauffage ou le refroidissement, et
- dans un premier temps la puissance de compresseur est régulée (120, 120A), et dans un deuxième temps, en fonction de la demande de chauffage ou de refroidissement, de la chaleur accumulée ou du froid accumulé dans ledit au moins un accumulateur thermique (7, 25) est libéré(e) (150, 15A) de façon régulée pour le chauffage ou le refroidissement.

14. Procédé selon la revendication 13, permettant de commander une installation selon l'une quelconque des revendications 7 à 11, **caractérisé en ce que**
- de manière cumulative ou en alternance avec la régulation de la puissance de compresseur, en fonction de la demande de chauffage ou de refroidissement, la haute pression de l'agent réfrigérant dans la zone haute pression du circuit d'agent réfrigérant (3) est régulée (240, 240A),
dans lequel la haute pression en comparaison avec la valeur de pression d'une haute pression non réduite est réduite d'une valeur de pression réglable dans la plage allant jusqu'à 50 % de la haute pression théorique (PS) ou à l'intérieur d'une plage partielle de celle-ci, et la valeur de pression de la haute pression de l'agent réfrigérant est située au-dessus de la pression d'évaporation à 20 °C, et
- dans un premier temps la puissance de compresseur est régulée (220, 220A), et dans un deuxième temps, pour la régulation de la puissance de compresseur, en fonction de la demande de chauffage ou de refroidissement, la haute pression de l'agent réfrigérant dans la zone haute pression du circuit d'agent réfrigérant (3) est régulée (240, 240A).

15. Procédé selon la revendication 13 ou 14, **caractérisée en ce qu'**en mode pompe à chaleur de l'installation (1), le niveau de la puissance ainsi que la durée du temps de fonctionnement relatif du au moins un compresseur (5) sont régulés (120A, 220A) de manière opposée, de préférence réciproque, à la température extérieure.

16. Procédé selon l'une quelconque des revendications 13 à 15, **caractérisé en ce qu'**en mode climatiseur de l'installation (1), le niveau de la puissance ainsi que la durée du temps de fonctionnement relatif du au moins un compresseur (5) sont régulés (120, 220) de manière synchrone, de préférence proportionnelle, à la température extérieure.
